# EUROPÄISCHE PATENTSCHRIFT

(11) **EP 1 945 975 B1**
(45) Veröffentlichungstag und Bekanntmachung des Hinweises auf die Patenterteilung: **15.04.2009**
(21) Anmeldenummer: 06707068.0
(22) Anmeldetag: 18.02.2006
(51) Int. Cl.: F16K 1/44

(54) **DOPPELSITZVENTIL**
DOUBLE SEAT VALVE
SOUPAPE A DOUBLE SIEGE

(30) Priorität: 12.11.2005 DE 102005054123; 25.11.2005 DE 102005056624; 12.12.2005 DE 102005059709
(43) Veröffentlichungstag der Anmeldung: 23.07.2008
(73) Patentinhaber: GEA Tuchenhagen GmbH, 21514 Büchen (DE)
(72) Erfinder: BURMESTER, Jens, 23883 Grambek (DE); SÜDEL, Matthias, 23626 Ratekau (DE)
(74) Vertreter: Hauck Patent- und Rechtsanwälte
(86) Internationale Anmeldenummer: PCT/EP2006/001483
(87) Internationale Veröffentlichungsnummer: WO 2007/054131

(56) Entgegenhaltungen:
- EP-A- 0 174 384
- WO-A-98/54494
- DE-A1- 19 608 792

## Beschreibung

### TECHNISCHES GEBIET

Die Erfindung betrifft ein Doppelsitzventil mit zwei seriell angeordneten, relativ zueinander bewegbaren Schließgliedern nach dem Oberbegriff des Anspruchs 1.

### STAND DER TECHNIK

Ein Doppelsitzventil der gattungsgemäßen Art, das wegen seiner Funktion, durch spaltweites Öffnen seiner Sitzflächen eine Reinigung der jeweils freigelegten Sitzfläche zu gestatten, auch als sitzreinigungsfähiges Doppelsitzventil bezeichnet wird, ist aus der DE 196 08 792 C2 bekannt. Bei jeder der drei Dichtungen im bekannten Doppelsitzventil handelt es sich um eine diskrete Dichtung, wobei jeder Dichtung nur eine einzige Funktion zukommt. Die erste Dichtung im ersten Schließglied ist eine rein radial wirkende Dichtung, die in der als zylindrische Mantelfläche ausgebildeten ersten Sitzfläche gleitet und dort infolge der vorgesehenen Vorspannung abdichtet (Dichtung mit Gleiteingriff). Die zweite Dichtung im zweiten Schließglied wirkt entweder auf die kegelförmig ausgebildete zweite Sitzfläche, sodass hier von einer axial/radial wirkenden Dichtung gesprochen werden kann (Dichtung mit Druckeingriff), oder es ist auch hier eine rein radial wirkende Dichtung vorgesehen (Dichtung mit Gleiteingriff). Im Regelfall befindet sich an der zweiten Sitzfläche auch der feste (metallische) Anschlag für die Endlagenbegrenzung des zweiten Schließgliedes (Schließstellung), wenn eine Dichtung mit Druckeingriff vorgesehen ist. Die dritte Dichtung, die sog. Mitteldichtung, entfaltet dann ihre Wirkung, wenn das erste Schließglied beim Öffnungshub am zweiten Schließglied über diese Mitteldichtung zur Anlage kommt und im Zuge der weiteren Öffnungsbewegung das zweite Schließglied in die volle Offenstellung mitnimmt (Dichtung im Druckeingriff). Dabei ist die Mitteldichtung in einer dem Leckagehohlraum zugewandten Stirnfläche am zweiten, abhängig angetriebenen Schließglied angeordnet.

Das vorstehend kurz skizzierte bekannte Doppelsitzventil verfügt über zwei sog. Sitzreinigungsstellungen, wobei die erste Sitzreinigungsstellung durch einen dem Öffnungshub entgegengerichteten ersten Teilhub erzeugt wird. In dieser Stellung bildet der leckageraumseitig am ersten Schließglied angeordnete zylindrische Ansatz mit der zugeordneten zylindrischen ersten Sitzfläche einen sog. Drosselspalt, über den die aus dem benachbarten ersten Ventilgehäuseteil herangeführte Reinigungsmittelmenge begrenzt werden kann. Die Sitzreinigungsstellung des zweiten Schließgliedes erfolgt durch einen dem Öffnungshub gleichgerichteten zweiten Teilhub, wobei in der Teiloffenstellung der leckageraumseitig am zweiten Schließglied angeordnete zylindrische Ansatz mit dem zugeordneten Teil der Verbindungsöffnung einen zweiten Drosselspalt bildet, der die in dieser Sitzreinigungsstellung erzeugte zweite Sitzreinigungsströmung mengenmäßig limitiert.

Da die beiden Schließglieder und die zugeordneten zylindrischen Ansätze unterschiedliche Durchmesser aufweisen, sind die jeweils zugeordneten Abschnitte der Verbindungsöffnung ebenfalls im Durchmesser unterschiedlich, sodass zwischen diesen beiden Durchmessern eine Übergangsfläche zustande kommt. Bei der Sitzreinigungsstellung des ersten Schließgliedes strömt die erste Sitzreinigungsströmung an der zylindrischen Sitzfläche entlang und trifft auf die stirnseitige Begrenzung am zweiten Schließglied, wobei durch den Durchmesserunterschied der beiden Abschnitte der Verbindungsöffnung zumindest ein direktes Auftreffen der ersten Sitzreinigungsströmung auf den zweiten Drosselspalt und damit den Sitzbereich des zweiten Schließgliedes verhindert wird. Bei der Sitzreinigungsstellung des zweiten Schließgliedes wird die zweite Sitzreinigungsströmung an der den Durchmesserunterschied zwischen den Abschnitten der Verbindungsöffnung überbrückenden Übergangsfläche radial nach innen umgelenkt und an der oberen stirnseitigen Begrenzungsfläche des ersten Schließgliedes vorbeigeführt. Auch in diese Falle wird dadurch ein unmittelbares Auftreffen der zweiten Sitzreinigungsströmung auf den ersten Drosselspalt und damit den Sitzbereich des ersten Schließgliedes verhindert.

Mit dem bekannten Doppelsitzventil lässt sich, wie gewünscht, die Reinigungsmittelmenge bei der jeweiligen Sitzreinigung limitieren. Die Forderungen, die an ein derartiges Doppelsitzventil in bestimmten Ländern gestellt werden, sind jedoch weitergehend. So wird beispielsweise in den USA gefordert, dass bei größeren Dichtungsdefekten oder gar dem Verlust einer der beiden Sitzdichtungen im Zuge der Sitzreinigung des anderen Schließgliedes über den jeweiligen Dichtungsdefekt bzw. den Sitzbereich ohne Sitzdichtung kein Reinigungsmittel hindurchtreten darf. Unter diesen Bedingungen stellt sich an ein derartiges Doppelsitzventil nicht nur die Forderung nach einer Begrenzung der Reinigungsmittelmenge und Vermeidung einer Direktbeaufschlagung der Sitzbereiche im Zuge der Sitzreinigung, sondern auch nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung direkt angeströmt oder druckerhöhend beaufschlagt wird.

Unter Direktbeaufschlagung wird jede auf die den Sitzbereich begrenzenden Wandungen senkrecht gerichtete Geschwindigkeitskomponente aus der jeweiligen Sitzreinigungsströmung verstanden. Es hat sich nämlich gezeigt, dass jede diesbezügliche Direktbeaufschlagung zu einer Umwandlung kinetischer Strömungsenergie in statischen Druck führt. Abhängig von dem Auftreffwinkel der Strömung auf die angeströmte Wand- oder Körperfläche ergibt sich eine Verzweigungsströmung mit einer sog. "Verzweigungsstromlinie", wobei letztere die Strömung in zwei Hälften teilt. Die Verzweigungsstromlinie selbst läuft auf den sog. "Staupunkt" auf, sodass an dieser Stelle die Geschwindigkeit gleich Null ist. Der Druckzuwachs in Folge dieses Abstoppens der Geschwindigkeit erhält auch die Bezeichnung "Staudruck". Die vorstehend dargestellten druckerhöhenden Mechanismen generieren eine Leckageströmung über den jeweiligen Drosselspalt und die defekte oder die gänzlich nicht mehr vorhandene Sitzdichtung.

Ein direktes Auftreffen der Sitzreinigungsströmung auf die den Leckagehohlraum begrenzenden Flächen ist daher in jedem Falle kontraproduktiv. Beim bekannten Doppelsitzventil kann die erste Sitzreinigungsströmung, die durch Anlüften des ersten Schließgliedes um den ersten Teilhub generiert wird, auf die stirnseitige Begrenzungsfläche des zweiten Schließgliedes, die die Mitteldichtung aufnimmt, mehr oder weniger lotrecht auftreffen. An der Auftreffstelle wird diese Strömung überwiegend zum Zentrum des Leckagehohlraumes umgelenkt und die Strömung tangiert u.a. auch die aus der Stirnfläche hervorstehende Mitteldichtung. Weiterhin ergibt sich an der Auftreffstelle eine Verzweigungsstromlinie, deren dem Sitzbereich zugewandter Abzweig dort einen Wirbel und einen Staudruck generieren kann.

Es sind weiterhin Doppelsitzventile bekannt **(**WO 98 54 494 A1**;** EP 0 819 876 B1**),** die auf die vorgenannte Mitteldichtung verzichten. Bei dem Doppelsitzventil gemäß WO 98 54 494 A1 wird die radial wirkende erste Sitzdichtung des ersten Schließgliedes im Zuge der Öffnungsbewegung in eine zylindrische, zur zylindrischen Sitzfläche des ersten Schließgliedes fluchtende, durchmessergleiche Ausnehmung im zweiten Schließglied hineingefahren. Erst dann wird das zweite Schließglied vom ersten Schließglied von seiner Sitzfläche angehoben und beide Schließglieder gelangen gemeinsam in die volle Offenstellung. Bei einer diesbezüglichen Ausgestaltung übernimmt die radiale Dichtung des ersten Schließgliedes die Abdichtung in der Schließstellung und auch die Funktion der sog. Mitteldichtung in der Abholstellung und in der nachfolgenden Offenstellung des Doppelsitzventils, wobei auch in diesen Stellungen diese erste Sitzdichtung rein radial wirkt (Gleiteingriff). Das zweite Schließglied ist als Sitzteller ausgebildet, dessen Dichtung mit einem konusförmigen Abschnitt der zweiten Sitzfläche zusammenwirkt, und es wird auch an diesem konusförmigen Abschnitt geführt und zentriert. Wenn es die Dichtung zulässt, ist an dem konusförmigen Abschnitt ggf. ein fester (metallischer) Anschlag zur Endlagenbegrenzung des zweiten Schließgliedes in der Schließstellung des Doppelsitzventils gegeben.

Bei der Sitzreinigung des ersten Schließgliedes wird die Sitzreinigungsströmung an der zylindrischen Wand der ersten Sitzfläche und der sich anschließenden Ausnehmung entlang geführt und prallt gegen die stirnseitige Begrenzung der zylindrischen Ausnehmung, die vorzugsweise senkrecht zu den fluchtenden zylindrischen Flächen orientiert ist. Eine derartige rechtwinkligen Umlenkung der Strömung ist insgesamt ungünstig, sie löst unkontrolliert von der Wandung ab und erzeugt Wirbel und Zirkulationsströmungen, die staudruckbildend sein können. Bei der bekannten Ausgestaltung ist weiterhin von Nachteil, dass die Form der Ausnehmung im zweiten Schließglied durch die Form und Abmessung der zylindrischen Sitzfläche im.Ventilgehäuse determiniert ist. Dadurch bestehen nur eingeschränkte Möglichkeiten zur strömungstechnischen Ausgestaltung dieser die Sitzreinigungsströmung führenden und lenkenden Ausnehmung.

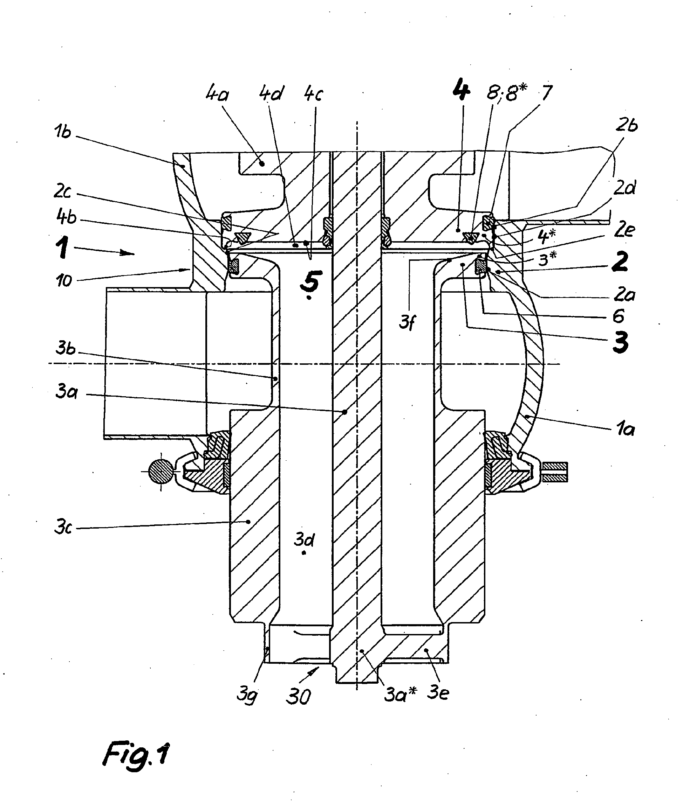

Aus der EP 0 174 384 A ist ein Doppelsitzventil bekannt, bei dem das erste Schließglied als Schieberkolben ausgebildet ist und an seinem Endabschnitt eine Dichtung aufweist, die radial gegenüber einer in der Verbindungsöffnung ausgebildeten zylindrischen ersten Sitzfläche abdichtet (Dichtung mit Gleiteingriff), wobei das zweite Schließglied an seinem dem ersten Schließglied zugewandten Ende eine Ausnehmung mit einer im Wesentlichen zylindrischen, mit der zylindrischen ersten Sitzfläche fluchtenden Umfangswand besitzt, und die Ausnehmung so dimensioniert ist, um während der Öffnungsbewegung den Endabschnitt und die radiale Dichtung des ersten Schließgliedes dichtend aufzunehmen, bevor das zweite Schließglied öffnet. Das zweite Schließglied ist dabei als Sitzteller ausgebildet (Figuren 1, 2 und 4a bis 4d), dessen Dichtung rein axial auf die zugeordnete Sitzfläche wirkt (Dichtung mit Druckeingriff), oder es ist als Schieberkolben ausgeführt, der an seinem Endabschnitt eine Dichtung aufweist, die radial gegenüber einer in der Verbindungsöffnung ausgebildeten zylindrischen zweiten Sitzfläche abdichtet (Dichtung im Gleiteingriff).

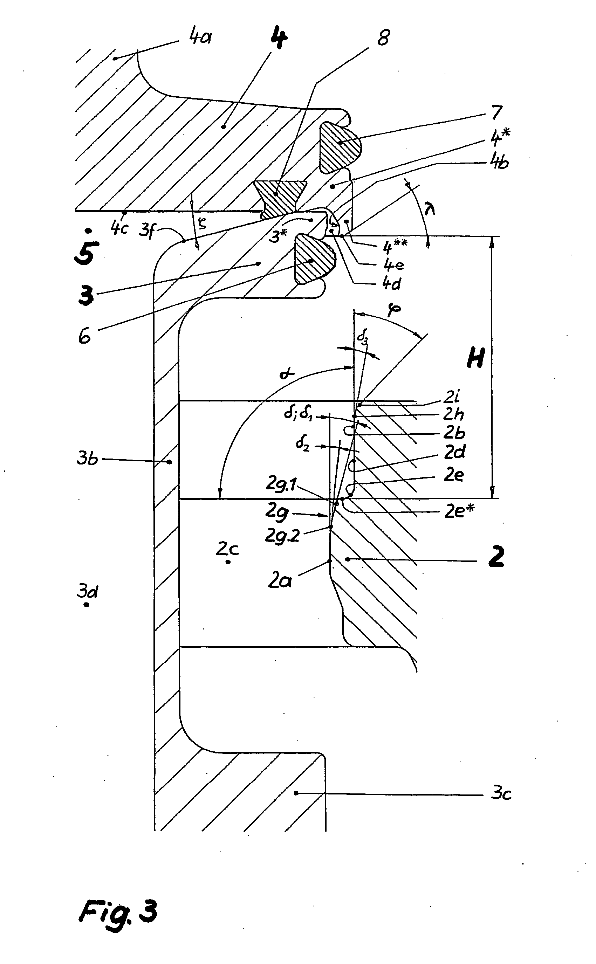

Auch bei diesem Doppelsitzventil sind die beiden Schließglieder unabhängig voneinander durch einen Teilhub jeweils spaltweit in eine Sitzreinigungsstellung zwecks Spülung ihrer Sitzflächen überführbar, wobei das zweite Schließglied durch einen der Öffnungsbewegung gleichgerichteten Teilhub in seine Sitzreinigungsstellung gelangt. Bei der Öffnungsbewegung des ersten Schließgliedes muss dieses auf seinem Hubweg aus der Schließstellung des Doppelsitzventils heraus (Figur 3a) bis zur Anlage am zweiten Schließglied und dessen anschließender Mitnahme in die Offenstellung des Doppelsitzventils (Figur 3d) eine vorbestimmte Zwischenstellung durchfahren (siehe Figur 3b), in der das dem ersten Schließglied zugeordnete Ventilgehäuseteil mit dem Leckagehohlraum und damit über dessen Ablaufbohrung mit der Umgebung des Doppelsitzventils verbunden ist. In der vorgenannten Zwischenstellung (Figur 3b) befindet sich die radiale Dichtung des schieberartig ausgebildeten ersten Schließgliedes in einer ringförmigen Umfangsnut am Ende der zylindrischen Umfangsfläche der Ausnehmung im zweiten Schließglied. Dies ist bestimmungsgemäß aber auch die Sitzreinigungsstellung für das erste Schließglied, in der somit kurzzeitig eine fluidgängige Verbindung zwischen dem Innenraum des unteren Ventilgehäuseteils und dem Leckagehohlraum besteht. Das bedeutet wiederum, dass bei jedem Öffnen des Doppelsitzventils, von der Schließ- in die volle Offenstellung, und bei jedem Schließen, von der vollen Offen- in die Schließstellung, diese Zwischenstellung unter Inkaufnahme einer Schaltleckage durchfahren werden muss.

In der EP 0 819 876 B1 ist ein sitzreinigungsfähiges Doppelsitzventil beschrieben, bei dem gleichfalls auf eine diskrete Mitteldichtung verzichtet wird und bei dem die erste, im zylindrischen Ventilsitz rein radial wirkende erste Sitzdichtung eine Doppelfunktion aufweist. Diese Doppelfunktion besteht darin, dass die auf dem als Schieberkolben ausgebildeten ersten Schließglied angeordnete erste Sitzdichtung neben einer radialen Dichtfunktion innerhalb des zylindrischen Ventilsitzes gleichzeitig eine axiale Abdichtfunktion gegenüber dem zweiten Schließglied aufweist (Druckeingriff). Diese axiale Abdichtfunktion wird wiederum dann wirksam, wenn das erste Schließglied im Zuge der Öffnungsbewegung in eine sog. Abholstellung mit dem zweiten Schließglied gelangt und dieses dann gleichfalls in eine Offenstellung überfährt.

Im Gegensatz zum Doppelsitzventil gemäß DE 196 08 792 C2 und dem Doppelsitzventil gemäß WO 98 54 494-A1 ist beim Doppelsitzventil gemäß EP 0 819 876 B1 der Drosselspalt am ersten Schließglied nicht leckageraumseitig, sondern leckageraumabgewandt angeordnet. Der zylindrische Ansatz zur Bildung des in Frage kommenden Drosselspaltes mit der zugeordneten Fläche der Verbindungsöffnung befindet sich, bezogen auf die Darstellungslage, unterhalb des ersten Schließgliedes. Um bei dieser Konfiguration die radial wirkende erste Sitzdichtung spaltweit von ihrer zugeordneten zylindrischen Ventilsitzfläche zu entfernen, ist eine ringförmige Ausnehmung in der Verbindungsöffnung erforderlich, in die im Zuge der zugeordneten Sitzreinigung diese erste Sitzdichtung hineingefahren wird. Der zylindrische Ansatz am ersten Schließglied bildet dann mit einem zugeordneten Abschnitt der Verbindungsöffnung unterhalb dieser ringförmigen Ausnehmung den gewünschten Drosselspalt. Hinsichtlich der reinen Drosselspaltwirkung mag die Umordnung des Drosselspaltes von einer leckageraumseitigen in eine leckageraumabgewandte Position gleichwertig sein, jedoch ergibt sich aus dieser Abwandlung eine reinigungskritische Situation für die erste Sitzdichtung im ersten Schließglied, wenn das zweite Schließglied in seine Sitzreinigungsstellung überführt wird. In diesem Falle besteht die Gefahr, dass wenigstens Teilmengen der zweiten Sitzreinigungsströmung unmittelbar auf den Dichtungsbereich des ersten Schließgliedes auftreffen, weil hier der ansonsten vorgeschaltete, diese erste Sitzdichtung abschirmende, den Drosselspalt bildende zylindrische Ansatz fehlt.

Sitzdichtungen von Doppelsitzventilen, die Doppelfunktionen in der vorstehend beschriebenen Weise besitzen, sind nicht unproblematisch, da sie unterschiedlichen Anforderungen genügen müssen und ihr Wirkungsbereich nicht klar definiert und abgegrenzt ist, wie dies bei diskreten Dichtungen mit jeweils ausschließlich radialer oder ausschließlich axialer/radialer oder ausschließlich axialer Funktion der Fall ist. Aufgrund der Tatsache, dass eine einzige Dichtung einerseits rein radial wirkt und in einem mehr oder weniger unmittelbar benachbarten Bereich axiale bzw. axiale/radiale Abdichtungsfunktion übernehmen muss, müssen diese jeweiligen Abdichtbereiche, soll die Dichtung nicht unnötig große Abmessungen erhalten, relativ nah zusammengeführt sein. Im vorliegenden Falle muss der rein radial wirkende Dichtungsbereich so lange in der zylindrischen Sitzfläche verbleiben, bis der axial/radial wirkende Bereich am anderen Schließglied zur Anlage gelangt ist. Der die beiden vorgenannten Abdichtungsbereiche überbrückende Teil der Sitzdichtung mit Doppelfunktion ist in der Regel von der zylindrischen Sitzfläche beabstandet, sodass dadurch zwischen Dichtung und zylindrischer Sitzfläche ein sumpfartiger, tiefer Einschnitt entsteht, der einen reinigungskritischen Bereich darstellt.

Es ist Aufgabe der vorliegenden Erfindung, ein Doppelsitzventil der gattungsgemäßen Art derart weiterzuentwickeln, dass eine möglichst verwirbelungsfreie Ableitung der Sitzreinigungsströmung in den und aus dem Leckagehohlraum sichergestellt ist und eine druckerhöhende Direktbeaufschlagung der Sitzbereiche sicher vermieden wird.

### ZUSAMMENFASSUNG DER ERFINDUNG

Die Aufgabe wird durch ein Doppelsitzventil mit den Merkmalen des Anspruchs 1 gelöst. Vorteilhafte Ausgestaltungen des sitzreinigungsfähigen Doppelsitzventils gemäß der Erfindung sind in den Unteransprüchen beschrieben.

Die vorliegende Erfindung basiert auf den grundlegenden Merkmalen des bekannten Doppelsitzventils gemäß DE 196 08 792 C2**,** wobei hier insbesondere der am jeweiligen Schließglied leckageraumseitig angeordnete zylindrische Ansatz zur Bildung des jeweiligen Drosselspaltes Verwendung findet. Darüber hinaus verwendet die vorliegende Erfindung den Durchmesserunterschied dieser zylindrischen Ansätze, der die Ausbildung einer Übergangsfläche zwischen den durchmesserunterschiedlichen Abschnitten der Verbindungsöffnung, die den zylindrischen Ansätzen zugeordnet sind, erlaubt. Das Prinzip der separaten Mitteldichtung, der die Aufgabe zukommt, in der sog. Abholstellung und beim Vollzug der weiteren Öffnungsbewegung bis zur Offenstellung die beiden Schließglieder gegeneinander abzudichten, wird dabei in jedem Falle beibehalten, wobei die erfindungsgemäße Lösung hinsichtlich der Lage der Mitteldichtung keineswegs nur auf eine der beiden möglichen Anordnungen festgelegt ist. Die erfindungsgemäße Lösung erlaubt entweder die Anordnung der Mitteldichtung in der Stirnfläche des zweiten Schließgliedes oder alternativ in der Stirnfläche des ersten Schließgliedes.

Zur Lösung der der Erfindung zugrunde liegenden Aufgabe besteht ein erster erfinderischer Grundgedanke darin, die bei der jeweiligen Sitzreinigung aus dem zugeordneten Drosselspalt austretende Sitzreinigungsströmung möglichst verwirbelungs- und hindemisfrei in den Leckagehohlraum einzuleiten und von dort in gleicher Weise in die Umgebung abzuführen. Dies gelingt zum einen durch eine neue, die Sitzreinigungsströmungen im Leckagehohlraum führende und lenkende Strömungskontur. Diese neue Strömungskontur sorgt bei der Sitzreinigung des unten liegenden, ersten Schließgliedes dafür, dass die erste Sitzreinigungsströmung dem Wandverlauf im Bereich der ersten Sitzfläche ablösungsfrei folgt. Anschließend erfolgt in einer zentrischen Ausnehmung, die in einer Stirnfläche des zylindrischen Ansatzes des zweiten Schließgliedes vorgesehen ist, eine stoßfreie Umlenkung dieser ersten Sitzreinigungsströmung, sodass letztere in eine zentrisch im ersten Schließglied angeordnete Ablaufbohrung gelangen kann, ohne mit dem ersten Schließglied im Bereich seiner den Leckagehohlraum berandenden Bereiche oder der Mitteldichtung staudruckbildend zu kollidieren. Die zentrische Ausnehmung wird im Wesentlichen von einer rotationssymmetrischen Umlenkfläche gebildet, die radial außenseits an der in Rede stehenden Stirnfläche des zweiten Schließgliedes beginnt und die stirnseitig von einer im Wesentlichen senkrecht zur Längsachse des zweiten Schließgliedes orientierten Stirnfläche begrenzt ist, wobei die Umlenkfläche in die Stirnfläche ausmündet.

Wesentlich ist die stoßfreie Umlenkung der Sitzreinigungsströmung in der Umlenkfläche. Dies gelingt erfindungsgemäß dadurch, dass, im Meridianschnitt gesehen, die Umlenkfläche eine Kontur mit knickfreiem Verlauf aufweist, wobei ein Richtungsvektor im Ausmündungspunkt der Umlenkfläche unter den vorg. Bedingungen in die zentrisch im ersten Schließglied angeordnete Ablaufbohrung weist. Es ist weiterhin wesentlich, dass am Anfangspunkt der Kontur eine zweite Umlaufkante ausgebildet ist, die in der Schließstellung des zweiten Schließgliedes unmittelbar an einen ersten Endabschnitt der ersten Sitzfläche angrenzt.

Bei der Strömungsführung der durch Anlüften des zweiten Schließgliedes generierten zweiten Sitzreinigungsströmung ist wesentlich, dass diese an einer durch die Übergangsfläche und den ersten Endabschnitt der ersten Sitzfläche gebildete erste Umlaufkante definiert ablöst und an den das erste Schließglied im Bereich des Leckagehohlraumes berandenden Flächen sicher tangential vorbeigeführt wird. Zu diesem Zweck ist zwischen der ersten Umlaufkante und den in Frage kommenden Bereichen des ersten Schließgliedes ein Sicherheitsabstand vorgesehen, der unter allen möglichen fertigungstechnischen Gegebenheiten ein diesbezügliches Auftreffen verhindert.

Ein zweiter erfinderischer Grundgedanke besteht darin, die Endlagenbegrenzung des zweiten Schließgliedes (Schieberkolben mit radial wirkender Dichtung im Gleiteingriff oder ggf. Sitzteller mit radial/axial wirkender Dichtung im Gleit-/Druckeingriff) in dessen Schließstellung nicht an dem mit der Dichtung zusammenwirkenden Sitzbereich vorzunehmen, wie dies regelmäßig bei bekannten Doppelsitzventilen der gattungsgemäßen Art der Fall ist, sondern den wünschenswerten, jedoch nicht in allen Fällen realisierten oder realisierbaren festen (metallischen) Anschlag des zweiten Schießgliedes an das der Dichtung abgewandte Ende des zugeordneten Drosselspaltes zu verlagern. Dies gelingt erfindungsgemäß dadurch, dass das zweite Schließglied in seiner Schließstellung mit einer an einer Stirnfläche seines zylindrischen Ansatzes angeordneten Anschlagfläche an der Übergangsfläche anliegt, und zwar unmittelbar an die erste Sitzfläche angrenzend. Durch diese Maßnahme, die im Stand der Technik ohne Vorbild ist, wird der bislang vorhandene, an den Leckagehohlraum angrenzende Spalt zwischen dem zweiten Schließglied und dem Ventilgehäuse beseitigt, wobei es sich in der Regel um einen metallischen Verschluss handelt. Über den vorhandenen Drosselspalt zwischen dem zylindrischen Ansatz am zweiten Schließglied und der zylindrischen Ausnehmung im Ventilgehäuse kann nunmehr im Zuge der Sitzreinigung des ersten Schließgliedes kein Reinigungsmittel an die ggf. defekte oder ggf. gänzlich nicht mehr vorhandene zweite Sitzdichtung gelangen.

Ein derartiges Schließen dieses kritischen Spaltes war bislang nicht möglich, da durch die Anschlagfläche im Sitzbereich der zweiten Sitzdichtung eine Überbestimmung vorgelegen hätte. Wesentlich bei der Realisierung des zweiten erfinderischen Grundgedankens ist, dass sich die jeweilige Anschlagfläche am zweiten Schließglied und am Ventilgehäuse unmittelbar, vollständig umlaufend und, so weit dies bei festem bzw. metallischem Kontakt möglich ist, dicht am Leckagehohlraum berühren. Hierzu ist eine hinreichende zentrische Führung des zweiten Schließgliedes im Ventilgehäuse und eine hinreichende Zentrizität aller an dieser Führung beteiligten Bauteile des Doppelsitzventil erforderlich.

Um einer Verkantung des zweiten Schließgliedes im Zuge seiner Schließbewegung zusätzlich entgegen zu wirken, ist gemäß einer vorteilhaften Ausgestaltung der Endabschnitt des zweiten zylindrischen Ansatzes radial außenseits im Anschluss an die Anschlagfläche derart ausgestaltet, dass hier eine ringförmig umlaufende Zentrierstelle gebildet ist. Diese Zentrierstelle ist, in radialer Richtung gesehen, so weit wie möglich nach außen verlagert und so nah wie zulässig an den durch einen Ausrundungsradius bestimmten Verlauf der Übergangsfläche herangeführt. Dies wird durch eine ringförmig umlaufende zweite Anschrägung erreicht, die am Endabschnitt vorgesehen ist und die gegen die Anschlagfläche unter einem Anschrägungswinkel verläuft und die zusammen mit dem zweiten Durchmesser des zweiten zylindrischen Ansatzes eine durch Abrundung erzeugte, die Zentrierung in der Übergangsfläche sicherstellende dritte Umlaufkante bildet.

Gemäß einem ersten Vorschlag ist die Mitteldichtung in der Stirnfläche des zweiten Schließgliedes angeordnet, wobei hier eine Stelle in der Stirnfläche der Ausnehmung radial innenseits von der Umlenkfläche in Frage kommt. Hierbei ist dafür Sorge zu tragen, dass zunächst die Umlenkfunktion der durch die Ausnehmung vorrangig gebildeten Umlenkfläche für die erste Sitzreinigung gewährleistet ist und die erste Sitzreinigungsströmung in ihrem weiteren Verlauf an der Mitteldichtung keine Behinderung dergestalt erfährt, dass es zur Wirbelbildung und zu Ablösungserscheinungen im Leckagehohlraum kommt, die zur lokalen Staudruckbildung führen kann. Das erste Schließglied stellt im vorliegenden Falle an einer zugeordneten Fläche seines Endabschnittes eine Dichtfläche für diese Mitteldichtung bereit.

Ein weiterer Vorschlag sieht vor, eine alternative Mitteldichtung in der stirnseitigen Begrenzung des zylindrischen Ansatzes des ersten Schließgliedes anzuordnen, wobei diese alternative Mitteldichtung dann vorzugsweise mit der Stirnfläche der Ausnehmung im zweiten Schließglied zusammenwirkt, und zwar mit einem Bereich radial innenseits von der Umlenkfläche. Andere Kontaktstellen sind jedoch auch möglich, wobei auch die Umlenkfläche selbst nicht auszuschließen ist.

Bei beiden Anordnungsvarianten der Mitteldichtung wird der Sicherheitsabstand des ersten Schließgliedes vom Richtungsvektor an der Austrittsstelle der Übergangsfläche in den ersten Endabschnitt derart bemessen, dass dieser wenigstens so groß wie die Summe aller Fertigungstoleranzen der Bauteile des Doppelsitzventils ist, die in der Schließstellung des ersten Schließgliedes dessen geringsten axialen Abstand zur Übergangsfläche bestimmen. Bei Anordnung der alternativen Mitteldichtung im ersten Schließglied ist dieser Sicherheitsabstand um einen Betrag zu vergrößern, um den diese aus der stirnseitigen Begrenzung des zylindrischen Ansatzes des ersten Schließgliedes herausragt.

Ein weiterer Vorschlag sieht vor, dass ein Richtungsvektor am Anfangspunkt der Kontur der Umlenkfläche mit dem ersten Endabschnitt der ersten Sitzfläche fluchtet. Diese bevorzugte Ausführungsform stellt einen weitestgehenden stoßfreien Eintritt der ersten Sitzreinigungsströmung in die Umlenkfläche und damit in die Ausnehmung im zweiten Schließglied sicher. Die vorgenannte Bedingung ist sowohl für einen zylindrischen Endabschnitt einzuhalten, der mit der zylindrischen ersten Sitzfläche fluchtet, als auch für einen konisch sich erweiternden ersten Endabschnitt (einer sog. Einfahrschräge), der im Rahmen der Erfindung gleichfalls vorgesehen ist. Der konisch sich erweiternde Endabschnitt kann dabei ausschließlich gekrümmte oder gekrümmte und gerade Konturelemente aufweisen.

Befriedigende Ergebnisse hinsichtlich einer stoßfreien Umlenkung werden gemäß einem weiteren Vorschlag auch noch erreicht, wenn ein Richtungsvektor am Anfangspunkt der Kontur der Umlenkfläche vom Richtungsvektor des ersten Endabschnitts um einen zweiten Umlenkwinkel von weniger als 15 Grad abweicht. Ein größerer zweiter Umlenkwinkel führt zur Staudruckbildung und ist daher kontraproduktiv.

Die erfindungsgemäß vorgeschlagene erste Einfahrschräge erleichtert das Einfahren der ersten Dichtung in die zylindrische erste Sitzfläche und vermindert dadurch den Verschleiß dieser Dichtung. Strömungstechnisch ist diese Einfahrschräge jedoch eher von Nachteil, da sie die erste Sitzreinigungsströmung durch Vergrößerung des Strömungsquerschnittes verzögert und damit eine Ablösungsgefahr für die Strömung darstellt. Es wird in diesem Zusammenhang vorgeschlagen, den die erste Einfahrschräge ausbildenden ersten Endabschnitt durch wenigstens eine Kegelmantelfläche darzustellen. Damit die erste Sitzreinigungsströmung an der Kontur dieser Kegelmantelfläche nicht ablöst, wird vorgeschlagen, den ersten Endabschnitt um einen Anstellwinkel zu neigen, der im Bereich zwischen 0 und 15 Grad, bevorzugt im Bereich zwischen 5 bis 15 Grad und hier wiederum bevorzugt mit 15 Grad ausgeführt ist.

Um die erste Einfahrschräge ablösungsfester auszugestalten, sieht ein weiterer Vorschlag vor, dass der erste Endabschnitt durch zwei mit einem Abrundungsradius abgerundet ineinander übergehende Kegelmantelflächen gebildet ist, wobei ein sich an die erste Sitzfläche unmittelbar anschließender zweiter Kegelmantel um einen zweiten Anstellwinkel gegen die erste Sitzfläche und der andere Kegelmantel um einen ersten Anstellwinkel gegen die erste Sitzfläche geneigt sind. Dabei sind der erste Anstellwinkel im Bereich 7,5 bis 15 Grad, bevorzugt mit 15 Grad und der zweite Anstellwinkel im Bereich 5 bis 10 Grad, bevorzugt mit 7,5 Grad ausgeführt.

Es hat sich weiterhin als günstig mit Blick auf eine Vermeidung jeglicher Staudruckbildung herausgestellt, wenn die von der Übergangsfläche und dem ersten Endabschnitt gebildete erste Umlaufkante mit einer kleinstmöglichen Eckenabrundung abgerundet ist. Im Idealfall wäre hier eine scharfkantige Ausführung vorzusehen, die jedoch aus festigungstechnischen und praktischen Gründen (Gefährdung der ersten Dichtung) nicht zulässig ist.

Gemäß einem weiteren Vorschlag bildet die ringförmige Ausnehmung im Gehäuse mit der Übergangsfläche einen stumpfen oder einen senkrechten ersten Umlenkwinkel, wobei der senkrechte Umlenkwinkel (90 Grad) bevorzugt wird, da hierdurch eine sichere, kollisionsfreie Überströmung des ersten Schließgliedes am ehesten sichergestellt ist. Der Übergang zwischen der Ausnehmung und der Übergangsfläche wird dabei mit einem Ausrundungsradius gerundet.

Um Staudruckbildung bei dem Eintritt der ersten Sitzreinigungsströmung in die Umlenkfläche im zweiten Schließglied zu vermeiden, sieht ein weiterer Vorschlag vor, dass die von der Anschlagfläche und der Umlenkfläche gebildete zweite Umlaufkante mit einer kleinstmöglichen zweiten Eckenabrundung abgerundet ist. Ein scharfkantiger Übergang in diesem Bereich ist aus fertigungstechnischen und praktischen Gründen nicht zulässig, ein relativ großer Abrundungsradius ist kontraproduktiv und führt zur unerwünschten Staudruckbildung.

Um zu vermeiden, dass die erste Sitzreinigungsströmung nach Verlassen der Umlenkfläche die Mitteldichtung oder die Stirnfläche der Ausnehmung staudruckbildend anströmt, ist weiterhin vorgesehen, dass die Umlenkfläche die Stirnfläche um einen axialen Hinterschneidungsabstand hinterschneidet. Dadurch kann die Kontur der Umlenkfläche im Bereich ihres Ausmündungspunktes derart um einen vierten Umlenkwinkel gegenüber der Stirnfläche der Ausnehmung angestellt werden, dass die erste Sitzreinigungsströmung die Mitteldichtung gerade tangiert, dadurch leicht in Richtung zum zweiten Schließglied hin abgelenkt wird und dann dem Wandverlauf der angrenzenden Stirnfläche der Ausnehmung zum Zwecke der Reinigung derselben folgen kann. Es hat sich als zweckmäßig herausgestellt, wenn der vierte Umlenkwinkel im Bereich von 5 bis 20, bevorzugt mit 15 Grad ausgeführt ist.

Im Sinne einer optimalen Strömungsführung der ersten Sitzreinigungsströmung hat sich eine Kontur bewährt, die eine Abfolge von Abschnitten aufweist, wobei der erste Abschnitte, der dritte Abschnitt und der aus der Stirnfläche ausmündende fünfte und letzte Abschnitt jeweils geradlinig ausgeführt sind, und wobei diese Abschnitte über den zweiten und den vierten Abschnitt, die die drei vorgenannten tangential mit einem größtmöglichen ersten und einem zweiten Umlenkradius abrunden, miteinander verbunden sind.

Ein in gleicher Weise befriedigendes Strömungsergebnis wird gemäß einem weiteren Vorschlag dadurch erreicht, dass sich die Kontur aus einer Abfolge gekrümmter Abschnitte zusammensetzt, die an ihren jeweiligen Übergangsstellen jeweils eine gemeinsame Tangente besitzen. Eine andere Ausführungsform sieht vor, dass die Kontur aus einem einzigen Abschnitt kontinuierlich veränderter Krümmungen besteht. Schließlich wird auch vorgeschlagen, dass die Kontur aus einem einzigen Abschnitt mit konstanter Krümmung gebildet ist.

Um unter allen Druck- und Geschwindigkeitsbedingungen eine einwandfreie und störungsfreie Ableitung des Reinigungsmittels sicherzustellen, ist vorgesehen, dass die dem Leckagehohlraum zugewandte stirnseitige Begrenzung des ersten Schließgliedes eine allseits umfängliche, zur Ablaufbohrung hin abfallende Anschrägung aufweist. Diese Anschrägung ist zweckmäßig als Kegelmantelfläche ausgeführt, die gegenüber der Grundfläche des Kegels im Bereich von 10 bis 20 Grad, bevorzugt 15 Grad geneigt ist.

Um Wirbel- und Staudruckbildung nicht nur im Bereich der vorstehend beschriebenen Sitzflächen des Doppelsitzventils zu vermeiden, ist es von Vorteil, wenn auf jegliche Einbauten und Hindernisse im übrigen Leckagehohlraum, so weit dies konstruktiv möglich ist, verzichtet wird. Diesbezüglich sieht daher ein weiterer Vorschlag vor, dass eine mit dem ersten Schließglied verbundene erste Verstellstange eine mit dem zweiten Schließglied verbundene, als Hohlstange ausgeführte zweite Verstellstange konzentrisch durchdringt, sich fliegend durch die Ablaufbohrung hindurch fortsetzt und an einem dem zweiten Schließglied abgewandten Ende des ersten Schließgliedes mit letzterem über wenigstens eine im Wesentlichen radial orientierte Traverse fest verbunden ist. Dadurch werden die ansonsten im Bereich des Leckagehohlraums üblichen Streben und anderen Verbindungsmittel vermieden und an ein relativ weit vom Leckagehohlraum entferntes Ende, wo sie keine störenden Einflüsse auf die Strömungsführung mehr haben können, verlagert.

In diesem Zusammenhang wird weiterhin vorgeschlagen, dass drei über den Umfang gleichmäßig verteilt angeordnete Traversen fest an einem Verstellstangenabschnitt vorgesehen sind, die jeweils radial außenseits fest mit einem umlaufenden Ring verbunden sind, und dass der Verstellstangenabschnitt, die Traversen und der Ring ein einstückiges Anschweißteil bilden. Dabei ist es weiterhin vorteilhaft, wenn sich der Anschweißteil außenseits über den Ring an einen einen leckagehohlraumfernen Abschnitt der Ablaufbohrung begrenzenden Druckausgleichskolben und innenseits über den Verstellstangenabschnitt an die erste Verstellstange anschließt und wenn der Ring in seinem Innendurchmesser derart gegenüber dem Durchmesser der Ablaufbohrung und der Zwischenschaltung eines konisch sich erweiternden Übergangsbereichs vergrößert ist, dass der Innendurchgang der Ablaufbohrung durch die Traversen nicht geschmälert ist.

Da durch den zweiten erfinderischen Grundgedanken die bislang im Stand der Technik notwendige metallische Anschlagfläche im Sitzbereich des zweiten Schließgliedes entfällt, ergeben sich nunmehr in diesem Bereich gegenüber bekannten Lösungen mehr Freiheitsgrade für die Ausgestaltung des zweiten Schließgliedes. Prinzipiell können in diesem Bereich rein radial, radial/axial und, bedingt möglich, auch rein axial wirkende zweite Dichtungen vorgesehen werden.

In diesem Zusammenhang sieht die Erfindung gemäß einer ersten Ausgestaltung vor, dass die zweite Sitzfläche zylindrisch ausgeführt und durch die ringförmige Ausnehmung gebildet ist, dass das zweite Schließglied eine zweite Dichtung aufweist, die radial gegenüber der zweiten Sitzfläche im Gleiteingriff abdichtet. Um das Einfahren der zweiten Dichtung in die zweite Sitzfläche zu erleichtern, ist diesbezüglich vorgesehen, dass die zweite Sitzfläche einen zum zweiten Schließglied hin sich erweiternden zweiten Endabschnitt (zweite Einfahrschräge) aufweist. Diese zweite Einfahrschräge ist gegenüber der zweiten Sitzfläche um einen dritten Anstellwinkel, bevorzugt im Bereich von 7,5 bis 15 Grad, bevorzugt mit 10 Grad angestellt.

Da die zweite Dichtung beim Ausfahren aus der zweiten Einfahrschräge eine elastische Rückverformung erfährt, die sich derart auswirkt, dass sie länger im strömungsbehindernden Kontakt mit der Einfahrschräge verbleibt, als dies wünschenswert ist, sieht ein weiterer Vorschlag vor, dass sich die zweite Einfahrschräge an ihrem dem zweiten Schließglied zugewandten Ende in eine Öffnungsschräge erweitert, wobei letztere gegenüber der zweiten Sitzfläche um einen Öffnungswinkel, bevorzugt im Bereich 35 bis 55 Grad, bevorzugt mit 45 Grad angestellt ist. Dadurch wird im Bereich dieser Öffnungsschräge eine wünschenswerte Querschnittserweiterung geschaffen, sodass der zur Sicherstellung einer unbehinderten zweiten Sitzreinigungsströmung erforderliche zweite Teilhub reduziert werden kann.

Eine die zweite Sitzfläche betreffende zweite Ausgestaltung sieht vor, dass die zweite Sitzfläche kegelförmig ausgeführt und gegenüber der zylindrischen Ausnehmung um einen Sitzwinkel geneigt ist, und dass das zweite Schließglied eine zweite Dichtung aufweist, die axial/radial gegenüber der zweiten Sitzfläche im Gleit-/Druckeingriff abdichtet. Der Sitzwinkel wird hierbei im Bereich zwischen 25 und 35 Grad, bevorzugt mit 30 Grad ausgeführt. Auch hier ist zur Reduzierung des die zweite Sitzreinigungsströmung sicherstellenden zweiten Teilhubes vorgesehen, dass sich die zweite Sitzfläche an ihrem den zweiten Schließglied zugewandten Ende in eine Öffnungsschräge erweitert, wobei letztere gegenüber der zylindrischen Ausnehmung um einen vorstehend bereits quantifizierten Öffnungswinkel angestellt ist.

Gemäß einer dritten Ausgestaltung wird vorgeschlagen, dass die zweite Sitzfläche senkrecht zur Längsachse des Doppelsitzventils angeordnet ist, und dass das zweite Schließglied eine zweite Dichtung aufweist, die axial gegenüber der zweiten Sitzfläche im Druckeingriff abdichtet. Eine derartige Lösung mit den Vorteilen einer rein axial wirkenden Dichtung und eines rein axial wirkenden Sitztellers ist allerdings nur dann möglich, wenn die Dichtung derart duktil beschaffen ist, dass die feste und ggf. metallische Anlage des zweiten Schließgliedes mit seiner Anschlagfläche an der Übergangsfläche unter allen Bedingungen sichergestellt ist.

### KURZBESCHREIBUNG DER ZEICHNUNGEN

Ausführungsbeispiele des vorgeschlagenen sitzreinigungsfähigen Doppelsitzventils gemäß der Erfindung sind in der Zeichnung dargestellt und werden nachfolgend nach Aufbau und Funktion beschrieben. Es zeigen
- **Figur 1**: im Längsschnitt das erfindungsgemäße sitzreinigungsfähige Doppelsitzventil in einer ersten Ausführungsform, und zwar im Sitzbereich und unterhalb desselben, wobei sich das Doppel- sitzventil in seiner Schließstellung befindet und eine Mitteldich- tung im zweiten Schließglied angeordnet ist;
- **Figur 2**: im Längs- und Ausschnitt eine vergrößerte Darstellung des Sitzbereichs des Doppelsitzventils gemäß **Figur 1****;**
- **Figur 3**: im Längs- und Ausschnitt den Sitzbereich und die beiden Schließglieder des Doppelsitzventils gemäß **Figur 2****,** wobei dieses sich in seiner Offenstellung befindet;
- **Figur 4**: im Längs- und Ausschnitt das Doppelsitzventil gemäß **Figur 2****,** wobei sich das unabhängig angetriebene, unten liegende, als Schieberkolben ausgebildete erste Schließglied in seiner Sitz- reinigungsstellung befindet;
- **Figur 5**: im Längs- und Ausschnitt das Doppelsitzventil gemäß **Figur 2****,** wobei sich das abhängig angetriebene, oben liegende, als Schieberkolben ausgebildete zweite Schließglied in seiner Sitz- reinigungsstellung befindet;
- **Figur 6**: im Längs- und Ausschnitt das erfindungsgemäße sitzreini- gungsfähige Doppelsitzventil in einer zweiten Ausführungs- form, wobei eine alternative Mitteldichtung im unten liegenden, ersten Schließglied angeordnet ist und sich das Doppelsitzven- til in seiner Schließstellung befindet;
- **Figuren 7a - 7c**: jeweils in schematischer und vergrößerter Darstellung die Kon- tur des Sitzbereichs für das zweite Schließglied des Doppel- sitzventils gemäß **Figur 2** oder **Figur 6****;**
- **Figur 8**: in schematischer und vergrößerter Darstellung eine Kontur des Sitzbereichs für das erste Schließglied und der angrenzenden Übergangsfläche für ein Doppelsitzventil gemäß **Figur 2** oder **Figur 6****;**
- **Figur 9**: in schematischer und vergrößerter Darstellung eine Kontur der Ausnehmung im zweiten Schließglied im Bereich der Umlenk- fläche und seines angrenzenden Sitzbereichs;
- **Figur 10a**: in perspektivischer Darstellung ein einstückiges Anschweißteil, bestehend aus drei einen Verstellstangenabschnitt mit einem Ring jeweils fest verbindenden Traversen, zur Verbindung der ersten Ventilstange mit einem am leckagehohlraumfernen Ende des ersten Schließgliedes angeordneten Druckausgleichskol- ben und
- **Figur 10b**: im Meridianschnitt die Verbundkonstruktion aus erstem Schließglied und mittelbar angrenzendem Druckausgleichskol- ben, Anschweißteil und erste Ventilstange.

### DETAILLIERTE BESCHREIBUNG

Das erfindungsgemäße Doppelsitzventil 1 **(****Figur 1****)** in einer ersten Ausführungsform besteht im Wesentlichen aus dem Ventilgehäuse 10 mit einem ersten und einem zweiten Ventilgehäuseteil 1a bzw. 1 b, den zwei unabhängig voneinander bewegbaren Schließgliedern 3 und 4 mit den jeweils zugeordneten Verstellstangen 3a bzw. 4a und einem Sitzring 2, der über eine innenseitige Verbindungsöffnung 2c eine Verbindung zwischen den Ventilgehäuseteilen 1 a, 1 b herstellt.

Das als Schieberkolben ausgebildete erste Schließglied 3 (aktives Schließglied) findet in der Schließstellung des Doppelsitzventils 1 in einer von der Verbindungsöffnung 2c gebildeten ersten Sitzfläche 2a, die als zylindrische Sitzfläche ausgeführt ist, dichtend Aufnahme. Hierzu ist in dem Schieberkolben 3 eine erste Dichtung 6 vorgesehen, die ausschließlich durch radiale Vorspannung mit der ersten Sitzfläche 2a zusammenwirkt (radiale Dichtung im Gleiteingriff). Das ebenfalls als Schieberkolben ausgebildete zweite Schließglied 4 wirkt in der Schließstellung des Doppelsitzventils 1 mit einer zweiten Sitzfläche 2b zusammen, die zylindrisch ausgeführt und durch eine ringförmige Ausnehmung 2d gebildet ist. Die Abdichtung erfolgt über eine zweite Dichtung 7, die radial gegenüber der zweiten Sitzfläche 2b im Gleiteingriff abdichtet.

Die beiden Schließglieder 3, 4 bilden sowohl in der dargestellten Schließ- als auch in einer Offenstellung **(****Figur 3****)** zwischen sich einen Leckagehohlraum 5, der über eine Ablaufbohrung 3d, die einen sich an das erste Schließglied 3 anschließenden Verbindungsteil 3b und einen sich an letzterem fortsetzenden Druckausgleichskolben 3c jeweils zentrisch durchdringt, mit der Umgebung des Doppelsitzventils 1 verbunden ist.

Üblicherweise ist die erste Verstellstange 3a im Bereich des ersten Schließgliedes 3 mit letzterem über mehrere die Ablaufbohrung 3d sternförmig und in radialer Richtung durchsetzende Stege fest verbunden. Da diese Stege negative Rückwirkungen auf die Strömungsverhältnisse und das Strömungsbild im Leckagehohlraum 5 haben können, ist bei dem erfindungsgemäßen Doppelsitzventil 1 vorgesehen, diese mechanisch notwendigen Verbindungsstellen in Form von drei über den Umfang gleichmäßig verteilt angeordnete Traversen 3e ein Stück weit vom Leckagehohlraum 5 entfernt, vorzugsweise an das dem ersten Schließglied 3 abgewandte Ende des Druckausgleichskolbens 3c hin, zu verlagern. Die feste Verbindung mit letzterem erfolgt über einen umlaufenden Ring 3g, mit dem die Traversen 3e radial außenseits fest verbunden sind. Zweckmäßig sind die Traversen 3e, der Ring 3g und ein Verstellstangenabschnitt 3a* in einem einstückigen Anschweißteil 30 zusammengefasst.

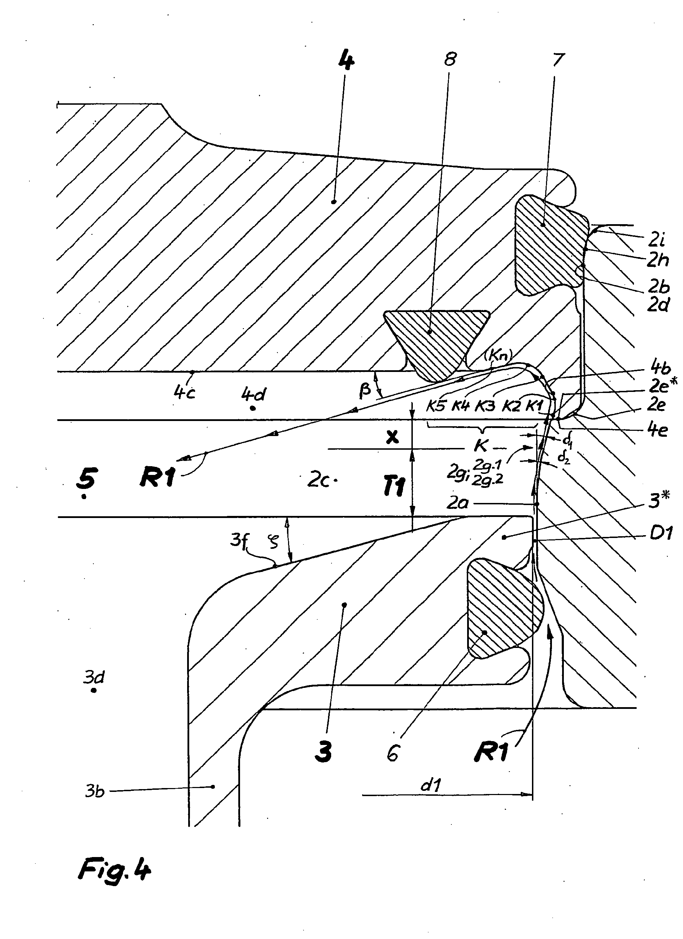

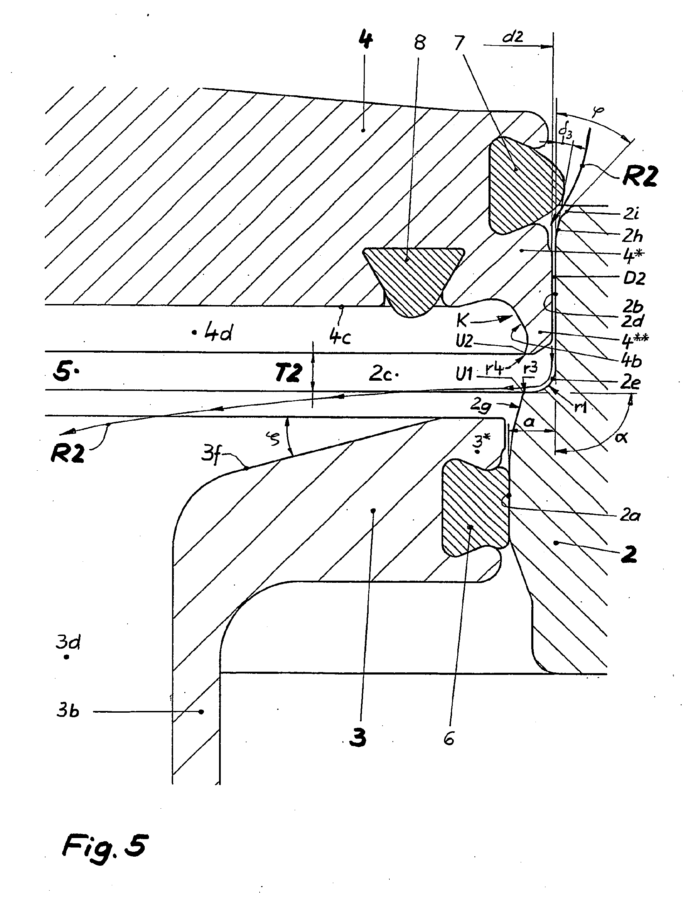

Jedes Schließglied 3, 4 weist leckageraumseitig einen zylindrischen Ansatz 3* bzw. 4* auf, der mit dem zugeordneten Teil der Verbindungsöffnung 2c im Sitzring 2 einen ringförmigen ersten Drosselspalt D1 (siehe auch **Figur 4**) bzw. einen ringförmigen zweiten Drosselspalt D2 (siehe auch **Figur 5**) bildet.

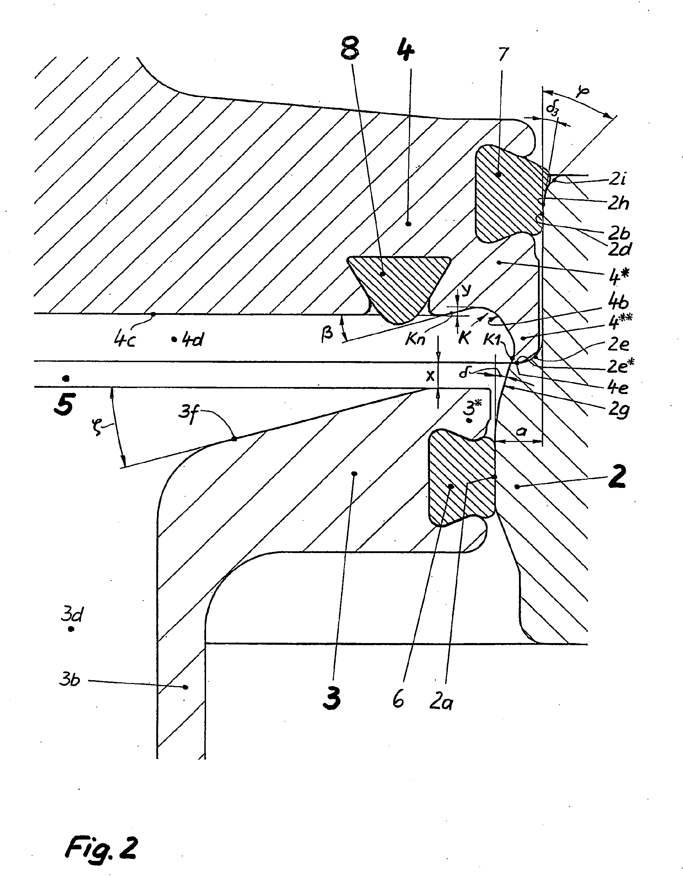

Die **Figuren 2** bis **5** verdeutlichen in Verbindung mit **Figur 1** Einzelheiten des Sitzbereichs für das Doppelsitzventil 1 in seiner ersten Ausführungsform. Letztere ist u.a. dadurch gekennzeichnet, dass eine Mitteldichtung 8, die die Schließglieder 3, 4 bei ihrer Öffnungs- und Schließbewegung und in der Offenstellung **(****Figur 3****)** gegeneinander abdichtet, im zweiten Schließglied 4 angeordnet ist. Das erste Schließglied 3 bildet mit seinem zylindrischen Ansatz 3* **(****Figur 4****),** der einen ersten Durchmesser d1 aufweist, und mit der zugeordneten ersten Sitzfläche 2a der Verbindungsöffnung 2c den ersten Drosselspalt D1. Das zweite Schließglied 4 formt in gleicher Weise mit seinem zweiten zylindrischen Ansatz 4* **(****Figur 5****),** der einen zweiten Durchmesser d2 aufweist, zusammen mit der ringförmigen, zylindrischen Ausnehmung 2d in der Verbindungsöffnung 2c den zweiten Drosselspalt D2.

Der halbe Durchmesserunterschied zwischen der ringförmigen Ausnehmung 2d und der ersten Sitzfläche 2a **(****Figur 2****)** ist mit a (radiale Breite einer Übergangsfläche 2e) gekennzeichnet. In diesem radialen Erstreckungsbereich a ist die Übergangsfläche 2e zwischen der ersten Sitzfläche 2a und der ringförmigen Ausnehmung 2d vorgesehen, wobei der in die erste Sitzfläche 2a ausmündende Endabschnitt der Übergangsfläche 2e mit der zylindrischen Mantelfläche der ringförmigen Ausnehmung 2d einen vorzugsweise senkrechten ersten Umlenkwinkel α bildet **(****Figur 5****).** Dabei weist die ringförmige Ausnehmung 2d in der Verbindungsöffnung 2c einen mit einem Ausrundungsradius r1 ausgeführten gerundeten Übergang zur Übergangsfläche 2e auf, wobei der Ausrundungsradius r1 mit r1 < a ausgeführt ist. Die radiale Breite a wird so groß ausgeführt, dass eine in der Sitzreinigungsstellung des zweiten Schließgliedes 4 aus dem zweiten Drosselspalt D2 in den Leckagehohlraum 5 austretende zweite Sitzreinigungsströmung R2 **(****Figur 5****)** an der Übergangsfläche 2e zum Zentrum des Leckagehohlraumes 5 hin und sicher über das erste Schließglied 3 hinweg umgelenkt wird. Um sicherzustellen, dass die zweite Sitzreinigungsströmung R2 nicht vorzeitig in Richtung des ersten Schließgliedes 3 abgelenkt wird, ist eine von der Übergangsfläche 2e und einem ersten Endabschnitt 2g gebildete erste Umlaufkante U1 mit einer kleinstmöglichen ersten Eckenabrundung r3 abgerundet, wodurch an dieser Stelle eine definierte Strömungsabrissstelle entsteht.

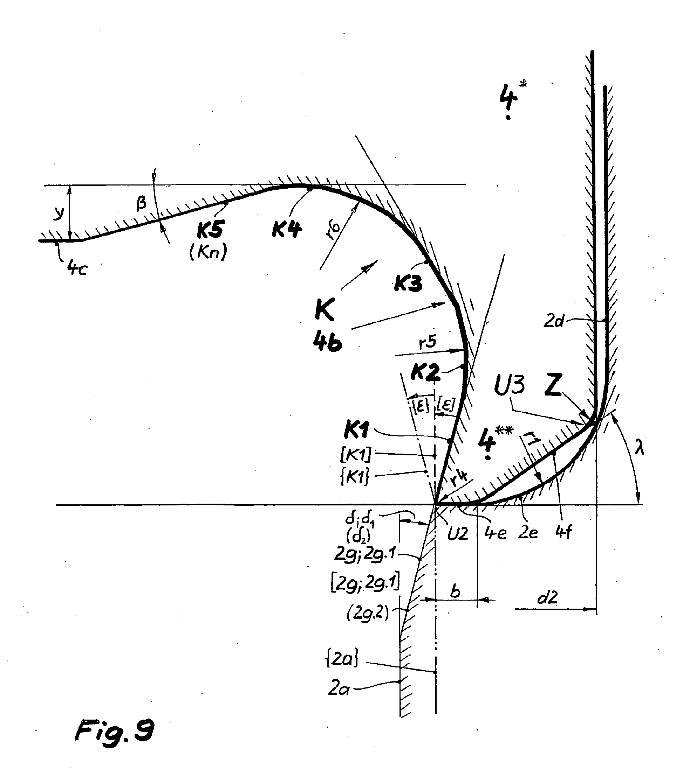

Durch diese Maßnahme wird sichergestellt, dass die aus dem zweiten Drosselspalt D2 austretende zweite Sitzreinigungsströmung R2 nicht auf den Sitzbereich der ersten Dichtung 6 gerichtet ist. Darüber hinaus muss die radiale Breite a der Übergangsfläche 2e auch die Realisierung einer ventilgehäuseseitigen Anschlagfläche 2e* **(****Figur 2****)** für das zweite Schließglied 4 sicherstellen, damit der zweite erfinderische Grundgedanke, nämlich ein dem Leckagehohlraum 5 unmittelbar benachbarter fester (metallischer) Anschlag des zweiten Schließgliedes 4 am Sitzring 2, zu verwirklichen ist. Die ventilgehäuseseitige Anschlagfläche 2e* korrespondiert mit einer an der Stirnseite eines Endabschnittes 4** des zweiten zylindrischen Ansatzes 4* vorgesehenen Anschlagfläche 4e (siehe auch **Figur 9**), die, in radialer Richtung gesehen, eine Breite b aufweist. Die ventilgehäuseseitige Anschlagfläche 2e* und die schließgliedseitige Anschlagfläche 4e sind jeweils geradlinig ausgeführt; der Ausrundungsradius r1 der Übergangsfläche 2e schließt sich tangential an die Anschlagfläche 2e* an.

In einer Stirnfläche des zylindrischen Ansatzes 4* des zweiten Schließgliedes 4 ist eine zentrische Ausnehmung 4d vorgesehen **(****Figur 2****),** die radial außenseits mit einer rotationssymmetrischen Umlenkfläche 4b beginnt und dort eine zweite Umlaufkante U2 **(****Figur 5****)** ausbildet und die stirnseitig von einer im Wesentlichen senkrecht zur Längsachse des zweiten Schließgliedes 4 orientierten Stirnfläche 4c begrenzt ist, wobei die Umlenkfläche 4b mit einem vierten Umlenkwinkel β in die Stirnfläche 4c ausmündet. Die zweite Umlaufkante U2 grenzt in der Schließstellung des zweiten Schließgliedes 4 **(****Figuren 5** und **2****)** unmittelbar an den ersten Endabschnitt 2g der ersten Sitzfläche 2a an. Im Meridianschnitt gesehen weist die Umlenkfläche 4b eine Kontur K mit knickfreiem Verlauf auf, wobei sich ein an den ersten Endabschnitt 2g angrenzender erster Abschnitt K1 der Kontur K über weitere Abschnitte K2, K3 bis Kn fortsetzt **(****Figur 4****)** und der Richtungsvektor im Endpunkt des letzten Abschnitts K5 bzw. Kn in die zentrisch im ersten Schließglied 3 angeordnete Ablaufbohrung 3d weist, ohne mit dem ersten Schließglied 3 im Bereich seiner der den Leckagehohlraum 5 berandenden Bereiche oder der Mitteldichtung 8 staudruckbildend zu kollidieren. Damit eine erste Sitzreinigungsströmung R1 an der Mitteldichtung 8 tangential vorbeigeführt werden kann **(****Figur 4****),** hinterschneidet die Umlenkfläche 4b die Stirnfläche 4c um einen axialen Hinterschneidungsabstand y **(****Figur 2****).** Eine dem Leckagehohlraum 5 zugewandte stirnseitige Begrenzung des ersten Schließgliedes 3 besitzt einen axialen Sicherheitsabstand x vom Richtungsvektor an der Austrittsstelle der Übergangsfläche 2e in den ersten Endabschnitt 2g, die als vorstehend erwähnte erste Umlaufkante U1 ausgebildet ist **(****Figur 5****).**

In der Offenstellung des Doppelsitzventils **(****Figur 3****),** wenn ein voller Öffnungshub H realisiert ist, wird deutlich, dass die in der Ausnehmung 4d angeordnete Mitteldichtung 8 für eine sichere Abdichtung der beiden Schließglieder 3, 4 zwischen dem Ventilgehäuse einerseits und dem Leckagehohlraum 5 andererseits sorgt.

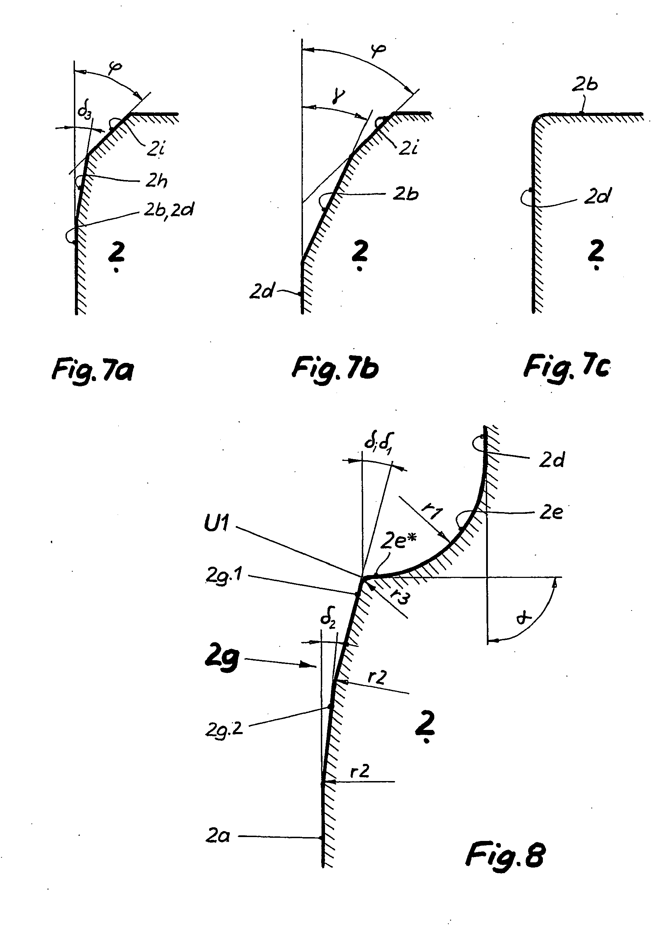

**Figur 2** verdeutlicht, dass der erste Abschnitt K1 mit dem ersten Endabschnitt 2g fluchtet. Dabei kann der erste Endabschnitt 2g als konischer Abschnitt (erste Einfahrschräge) mit ausschließlich gekrümmten oder gekrümmten und geraden Konturelementen ausgebildet sein, der sich mit einem Abrundungsradius r2 an die Sitzfläche 2a anschließt (s. auch **Figur 8**) und sich zum zweiten Schließglied 4 hin öffnet. Der erste Endabschnitt 2g ist um einen Anstellwinkel δ gegen die erste Sitzfläche 2a geneigt. Der Anstellwinkel δ ist im Bereich 0 bis 15 Grad, bevorzugt im Bereich 5 bis 15 Grad und hier wiederum bevorzugt mit δ = 15 Grad ausgeführt.

Eine weitere Optimierung des ersten Endabschnitts 2g in Form einer weiter verbesserten Einfahrschräge zeichnet sich gemäß **Figur 8** dadurch aus, dass der erste Endabschnitt 2g durch zwei mit dem Abrundungsradius r2 abgerundet ineinander übergehende Kegelmantelflächen gebildet ist, wobei ein sich an die erste Sitzfläche 2a unmittelbar anschließender zweiter Kegelmantel 2g.2 um einen zweiten Anstellwinkel δ₂ gegen die erste Sitzfläche 2a und der andere Kegelmantel 2g.1 um einen ersten Anstellwinkel δ₁ gegen die erste Sitzfläche 2a geneigt sind. Der erste Anstellwinkel δ₁ ist im Bereich 7,5 bis 15 Grad, bevorzugt mit δ₁= 15 Grad und der zweite Anstellwinkel δ₂ ist bevorzugt im Bereich 5 bis 10 Grad, bevorzugt mit δ₂ = 7,5 Grad ausgeführt. Weiterhin ist in **Figur 2** gezeigt, dass die Stirnfläche des ersten Schließgliedes 3 zur Ablaufbohrung 3d hin mit einer abfallenden, konischen Anschrägung 3f versehen ist, wobei letztere bevorzugt als Kegelmantelfläche ausgeführt und diese gegenüber der Grundfläche des Kegels um einen Neigungswinkel ζ geneigt ist. Dieser Neigungswinkel ζ wird bevorzugt im Bereich 10 bis 20 Grad und hier wiederum bevorzugt mit ζ = 15 Grad ausgeführt.

Die nach Vollzug eines ersten Teilhubes T1 aus dem ersten Drosselspalt D1 **(****Figur 4****)** im Zuge der Sitzreinigung des ersten Schließgliedes 3 austretende erste Sitzreinigungsströmung R1 strömt zunächst senkrecht an der ersten Sitzfläche 2a entlang, folgt dem Verlauf des als erste Einfahrschräge ausgebildeten ersten Endabschnitts 2g bzw. der Kegelmängel 2g.2, 2g.1 ohne abzulösen und tritt stoßfrei in die Umlenkfläche 4b in der Ausnehmung 4d ein, wird dort entsprechend der Kontur K umgelenkt, verlässt den fünften und letzten Abschnitt K5 (K5 = Kn) mit dem vierten Umlenkwinkel β, tangiert die Mitteldichtung 8, legt sich weitgehend tangential an die Stirnfläche 4c an und gelangt schließlich in den Bereich der Ablaufbohrung 3d.

Der detailliertere Verlauf der Kontur K mit knickfreiem Verlauf ist aus **Figur 9** im Einzelnen ersichtlich. Der erste Abschnitt K1, ein dritter Abschnitt K3 und ein aus der Stirnfläche 4c ausmündender fünfter und letzter Abschnitt K5 (K5 = Kn) sind jeweils geradlinig ausgeführt und diese Abschnitte K1, K3 und K5 sind über einen zweiten und einen vierten Abschnitt K2, K4, die letztere tangential mit einem größtmöglichen ersten und einem zweiten Umlenkradius r5, r6 abrunden, miteinander verbunden. Es wird deutlich, dass der erste Abschnitt K1 mit dem ersten Endabschnitt 2g fluchtet. Damit die erste Sitzreinigungsströmung R1 (s. hierzu auch **Figur 4**) an der zweiten Umlaufkante U2 keinen Staudruck ausbilden kann, grenzt letztere in der Schließstellung des zweiten Schließgliedes 4 unmittelbar an den ersten Endabschnitt 2g an und ist mit der kleinstmöglichen zweiten Eckenabrundung r4 abgerundet.

Eine weitere Ausformung der Umlenkfläche 4b sieht vor, dass die Kontur K aus einer Abfolge gekrümmter Abschnitte K1 bis Kn besteht (z.B. Kreisbogen, Ellipsen, Parabeln, Hyperbeln), die an ihren jeweiligen Übergangsstellen jeweils eine gemeinsame Tangente besitzen. Gemäß einer anderen Ausgestaltung ist die Kontur K aus einem einzigen Abschnitt kontinuierlich veränderter Krümmung gebildet (z.B. Spirale oder ein anderer mathematisch geschlossen beschreibbarer Kurvenverlauf). Die Kontur K ist nach einem weiteren Vorschlag mit einem einzigen Abschnitt mit konstanter Krümmung ausgeführt (z.B. ein einziger Kreisbogen mit dem erforderlichen tangentialen Ein- und Austritt).

Es ist durchaus möglich, den ersten Abschnitt K1 nicht mit dem ersten Endabschnitt 2g bzw. 2g.1 fluchten zu lassen (s. Verlauf [K1] in **Figur 9**). Eine Anstellung des ersten Abschnitts [K1] um einen zweiten Umlenkwinkel [ε] ist möglich, wenn letzterer unterhalb von 15 Grad bleibt. Ansonsten kommt es im Bereich der zweiten Umlaufkante U2 zur Staudruckbildung.

Falls der erste Endabschnitt 2g bzw. 2g.1 nicht als Einfahrschräge ausgebildet ist, sondern dem Verlauf der ersten Sitzfläche 2a folgt und bis zu seinem Ende zylindrisch ausgeführt ist (s. Verlauf {2a} und {K1} in **Figur 9**), kann der erste Abschnitt K1 wiederum fluchtend zum ersten Endabschnitt 2g, 2g.1 ausgeführt sein (s. Verlauf des Abschnitts [K1]) oder er kann aber auch, wie dies **Figur 9** verdeutlicht, als Abschnitt {K1} um den besagten zweiten Umlenkwinkel {ε} < 15 Grad gegen den ersten Endabschnitt 2g, 2g.1 geneigt sein.

Der Endabschnitt 4** des zweiten zylindrischen Ansatzes 4* weist stirnseitig radial außenseits im Anschluss an die Anschlagfläche 4e eine ringförmig umlaufende zweite Anschrägung 4f auf, die gegen die Anschlagfläche 4e unter einem Anschrägungswinkel λ verläuft. Der von der Anschrägung 4f und der Mantelfläche des zweiten zylindrischen Ansatzes 4* am zweiten Durchmesser d2 gebildete umlaufende Durchdringungsbereich ist in Form einer abgerundeten dritten Umlaufkante U3 ausgebildet. Der Anschrägungswinkel λ ist derart bemessen, dass die dritte Umlaufkante U3, in radialer Richtung gesehen, so weit wie möglich nach außen verlagert und so nah wie zulässig an den durch den Ausrundungsradius r1 bestimmten Verlauf der Übergangsfläche 2e herangeführt ist und dort mit letzterer eine ringförmig umlaufende Zentrierstelle Z bildet. Dadurch ist das zweite Schließgliedes 4 kurz vor dem Einfahren in seine Anschlagposition in jedem Falle derart hinreichend koaxial zentriert, dass die erste und die zweite Umlaufkante U1, U2 in der notwendigen Weise korrespondieren, auch wenn ein unplanmäßiges Verkanten des zweiten Schließgliedes 4 aufgrund mangelhafter Führung an den hierfür planmäßig vorgesehenen Führungsstellen einmal auftreten sollte.

Das leckageraumseitige Ende des in **Figur 5** bezeichneten zweiten Drosselspaltes D2 ist durch die vorstehend beschriebene Anschlagposition (s. **Figur 4**) des zweiten Schließgliedes 4 an der ventilgehäuseseitigen Anschlagfläche 2e* weitestgehend dicht verschlossen (so weit dies bei einer Anlage Metall gegen Metall grundsätzlich möglich ist). Reinigungsflüssigkeit der ersten Sitzreinigungsströmung R1 kann nicht mehr in den zweiten Drosselspalt D2 und damit in den Bereich der zweiten Dichtung 7 eintreten. Selbst bei ggf. stark beschädigter oder ggf. gänzlich entfernter zweiter Dichtung 7 ist daher kein Durchtritt für Reinigungsflüssigkeit mehr gegeben.

Gemäß **Figur 5** nimmt das zweite Schließglied 4 nach Vollzug eines zweiten Teilhubes T2 seine zweite Sitzreinigungsstellung ein. Die zweite Dichtung 7 ist dabei spaltweit von einer Öffnungsschräge 2i entfernt, und der zweite zylindrische Ansatz 4* bildet zusammen mit der ringförmigen Ausnehmung 2d den zweiten Drosselspalt D2, durch den die zweite Sitzreinigungsströmung R2 an die nunmehr überströmbare, freigelegte Sitzfläche 2b herangeführt und in den Leckagehohlraum 5 eingeleitet werden kann. Die zweite Sitzfläche 2b ist zylindrisch ausgeführt und wird durch die ringförmige Ausnehmung 2d gebildet. Das zweite Schließglied 4 weist die zweite Dichtung 7 auf, die ausweislich der **Figur 2** (Schließstellung) radial gegenüber der zweiten Sitzfläche 2b im Gleiteingriff abdichtet.

Aus **Figur 5** und **Figur 7a** wird weiterhin deutlich, dass auch die zweite Sitzfläche 2b eine dichtungsschonende Einfahrschräge 2h aufweist, wobei letztere gegenüber der zweiten Sitzfläche 2b um einen dritten Anstellwinkel δ₃, bevorzugt im Bereich 7, 5 bis 15 Grad, hier wiederum bevorzugt mit δ₃ = 10 Grad angestellt ist. Um den zur Freilegung der zweiten Sitzfläche 2b notwendigen zweiten Teilhub T2 zu reduzieren, erweitert sich die zweite Einfahrschräge 2h an ihrem dem zweiten Schließglied 4 zugewandten Ende in die vorgenannte Öffnungsschräge 2i, wobei letztere gegenüber der zweiten Sitzfläche 2b um einen Öffnungswinkel ϕ, bevorzugt im Bereich 35 bis 55 Grad und hier wiederum bevorzugt mit ϕ = 45 Grad angestellt ist.

Die zweite Sitzreinigungsströmung R2 verlässt den zweiten Drosselspalt D2 **(****Figur 5****)** zunächst entlang der ringförmigen Ausnehmung 2d und wird über die Übergangsfläche 2e zum Zentrum des Leckagehohlraumes 5 hin umgelenkt. Ein unmittelbares und direktes Bespritzen des Sitzbereichs der ersten Dichtung 6 wird dadurch sicher verhindert. Das erste Schließglied 3 ist bei der Sitzreinigung des zweiten Schließgliedes 4 axial derart positioniert, dass die zweite Sitzreinigungsströmung R2 unbehindert über das erste Schließglied 3 hinweg strömen kann. Abhängig von den gegebenen Druckverhältnissen und unter dem Einfluss der Schwerkraft bei Anordnung des Doppelsitzventils 1 gemäß Zeichnungslage nimmt der Flüssigkeitsstrahl einen leicht parabelförmigen Verlauf, sodass die Stirnfläche des ersten Schließgliedes 3 mit seiner Anschrägung 3f tangential überströmt wird, was aus reinigungstechnischen Gründen wünschenswert ist. Durch diese Strömungsführung und Positionierung des ersten Schließgliedes 3 wird sogar ein Besaugen des Sitzbereichs der ersten Dichtung 6 erreicht, sodass selbst bei Verlust oder signifikanter Beschädigung der ersten Dichtung 6 kein Reinigungsmittel in das benachbarte erste Ventilgehäuseteil 1a eintreten kann.

Die zweite Sitzfläche 2b kann auch gemäß **Figur 7b** kegelförmig ausgeführt sein, wobei sie gegenüber der zylindrischen Ausnehmung 2d um einen Sitzwinkel γ geneigt ist. Die zweite Dichtung 7 des zweiten Schließgliedes 4 dichtet dann axial/radial gegenüber der zweiten Sitzfläche 2b im Gleit-/Druckeingriff ab. Eine zweite Einfahrschräge für die zweite Dichtung 7 ist in diesem Falle nicht erforderlich, jedoch kann sich die zweite Sitzfläche 2b an ihrem dem zweiten Schließglied 4 zugewandten Ende in die vorstehend beschriebene Öffnungsschräge 2i mit dem dort quantifizierten Öffnungswinkel ϕ erweitern.

Das erfindungsgemäße Doppelsitzventil 1 erlaubt auch eine Ausgestaltung der zweiten Sitzfläche 2b senkrecht zu seiner Längsachse **(****Figur 7c****),** wobei die im zweiten Schließglied 4 angeordnete zweite Dichtung 7 axial gegenüber dieser zweiten Sitzfläche 2b im Druckeingriff abdichtet. Diese Lösung ist allerdings nur dann möglich, wenn die axial wirkende zweite Dichtung 7 so duktil ist, dass die Anschlagposition des zweiten Schließgliedes 4 nach wie vor an der Anschlagfläche 2e* im Bereich der in die erste Sitzfläche 2a austretenden Übergangsfläche 2e sichergestellt ist.

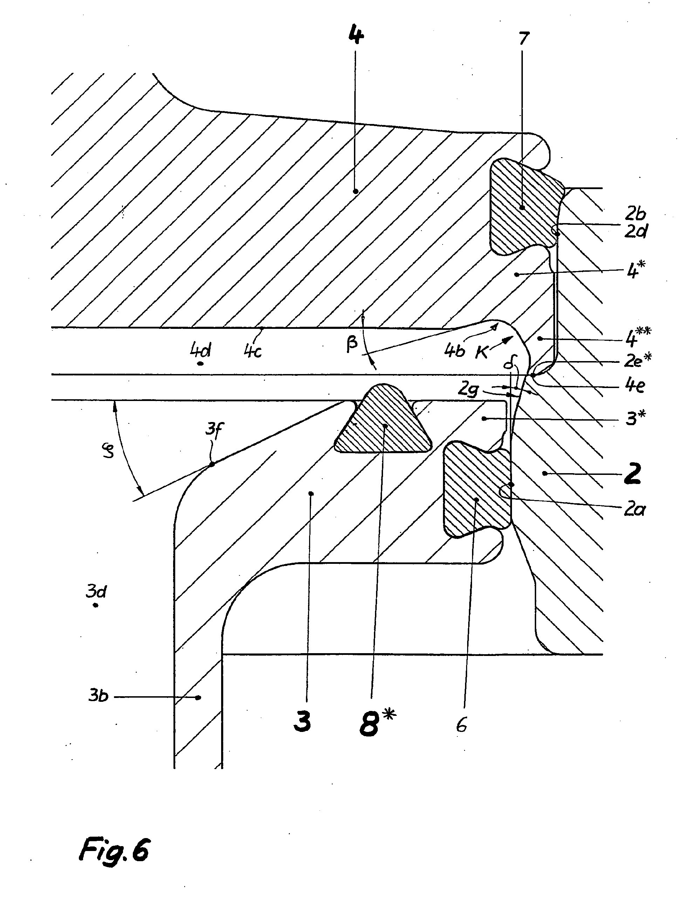

Aus **Figur 6** ist ersichtlich, dass das sitzreinigungsfähige Doppelsitzventil 1 gemäß der Erfindung in seiner zweiten Ausführungsform, bei der eine alternative Mitteldichtung 8* im ersten Schließglied 3 angeordnet ist, uneingeschränkt alle im Zusammenhang mit der ersten Ausführungsform beschriebenen erfindungswesentlichen Merkmale aufweist. Die alternative Mitteldichtung 8* korrespondiert und wirkt in diesem Falle mit der Stirnfläche 4c der Ausnehmung 4d im zweiten Schließglied 4 zusammen.

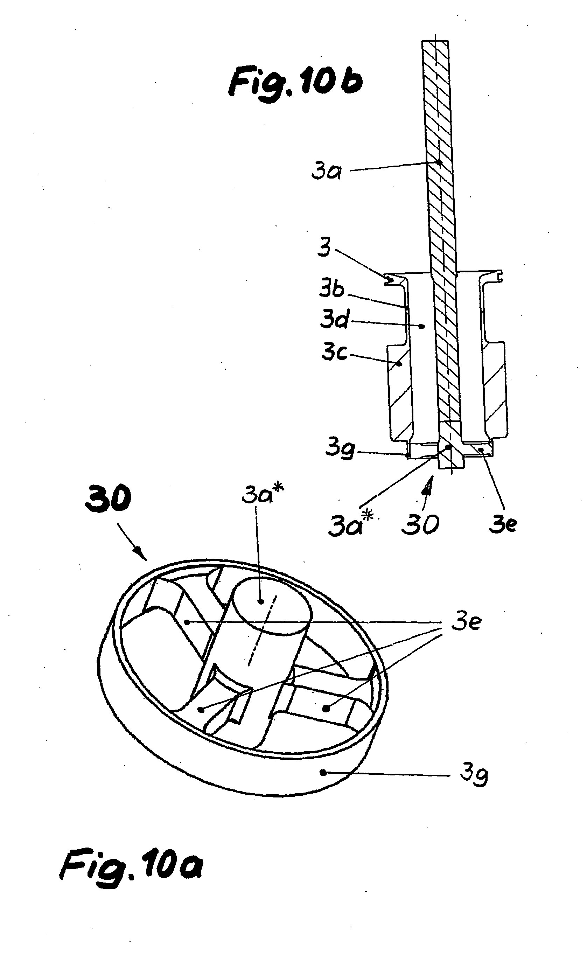

In **Figur 10a** ist das einstückige Anschweißteil 30 dargestellt, das aus dem Verstellstangenabschnitt 3a*, den drei Traversen 3e und dem Ring 3g gebildet ist. Die drei über den Umfang des Verstellstangenabschnitts 3a* gleichmäßig verteilt angeordneten Traversen 3e sind fest mit diesem verbunden. Sie sind jeweils radial außenseits gleichfalls fest mit dem umlaufenden Ring 3g verbunden. Der Anschweißteil 30 ist außenseits über den Ring 3g an den den leckagehohlraumfernen Abschnitt der Ablaufbohrung 3d begrenzenden Druckausgleichskolben 3c (s. **Figur 10b**) und innenseits über den Verstellstangenabschnitt 3a* an die erste Verstellstange 3a angeschweißt. Dabei ist der Ring 3g in seinem Innendurchmesser derart gegenüber dem Durchmesser der Ablaufbohrung 3d unter Zwischenschaltung eines konisch sich erweiternden Übergangsbereichs vergrößert, dass der Innendurchgang der Ablaufbohrung 3d durch die Traversen 3e nicht geschmälert ist.

### BEZUGSZEICHENLISTE DER VERWENDETEN ABKÜRZUNGEN

- 1: Doppelsitzventil
- 10: Ventilgehäuse
- 1 a: erstes Ventilgehäuseteil
- 1 b: zweites Ventilgehäuseteil

- 2: Sitzring
- 2a: erste Sitzfläche (zylindrische Sitzfläche)
- 2b: zweite Sitzfläche (axial; radial; axial/radial)
- 2c: Verbindungsöffnung
- 2d: ringförmige Ausnehmung
- 2e: Übergangsfläche
- 2e*: ventilgehäuseseitige Anschlagfläche
- 2g: erster Endabschnitt (erste Einfahrschräge)
- 2g.1: erster Kegelmantel
- 2g.2: zweiter Kegelmantel
- 2h: zweiter Endabschnitt (zweite Einfahrschräge)
- 2i: Öffnungsschräge

- 3: erstes Schließglied (Schieberkolben)
- 3*: erster zylindrischer Ansatz
- 3a: erste Verstellstange
- 3b: Verbindungsteil
- 3c: Druckausgleichskolben
- 3d: Ablaufbohrung
- 3f: Anschrägung

- 30: Anschweißteil
- 3a*: Verstellstangenabschnitt
- 3e: Traverse
- 3g: Ring

- 4: zweites Schließglied
- 4*: zweiter zylindrischer Ansatz
- 4**: Endabschnitt
- 4a: zweite Verstellstange
- 4b: Umlenkfläche
- 4c: Stirnfläche
- 4d: Ausnehmung
- 4e: Anschlagfläche (schließgliedseitig)
- 4f: zweite Anschrägung

- 5: Leckagehohlraum
- 6: erste Dichtung (radial)
- 7: zweite Dichtung (axial; radial; axial/radial)
- 8: Mitteldichtung (im zweiten Schließglied 4)
- 8*: alternative Mitteldichtung (im ersten Schließglied 3)

- a: radiale Breite der Übergangsfläche
- b: Breite (schließgliedseitige Anschlagfläche am Endabschnitt 4**)
- d1: erster Durchmesser
- d2: zweiter Durchmesser

- r1: Ausrundungsradius (der Übergangsfläche 2e)
- r2: Abrundungsradius (erste Einfahrschräge 2g; 2g.1, 2g.2)
- r3: erste Eckenabrundung (gehäuseseitig; Sitzring 2)
- r4: zweite Eckenabrundung (zweites Schließglied 4)
- r5: erster Umlenkradius
- r6: zweiter Umlenkradius

- x: axialer Sicherheitsabstand
- y: axialer Hinterschneidungsabstand

- α: erster Umlenkwinkel
- β: vierter Umlenkwinkel
- γ: Sitzwinkel
- δ: Anstellwinkel (der ersten Einfahrschräge 2g)
- δ₁: erster Anstellwinkel (erster konischer Abschnitt 2g.1)
- δ₂: zweiter Anstellwinkel (zweiter konischer Abschnitt 2g.2)
- δ₃: dritter Anstellwinkel (der zweiten Einfahrschräge 2h)
- ε: zweiter Umlenkwinkel
- ζ: Neigungswinkel
- λ: Anschrägungswinkel
- ϕ: Öffnungswinkel

- D1: erster Drosselspalt
- D2: zweiter Drosselspalt
- H: voller Öffnungshub (volle Offenstellung)

- K: Kontur der Umlenkfläche 4b
- K1: erster Abschnitt (erste Gerade)
- K2: erster Umlenkradius r5
- K3: dritter Abschnitt (zweite Gerade)
- K4: zweiter Umlenkradius r6
- K5: fünfter Abschnitt (dritte Gerade)
- Kn: letzter Abschnitt

- R1: erste Sitzreinigungsströmung
- R2: zweite Sitzreinigungsströmung
- T1: erster Teilhub (erste Teiloffenstellung/erste Sitzreinigungsstellung)
- T2: zweiter Teilhub (zweite Teiloffenstellung/zweite Sitzreinigungsstellung)
- U1: erste Umlaufkante
- U2: zweite Umlaufkante
- U3: dritte Umlaufkante
- Z: Zentrierstelle

## Patentansprüche

1. Doppelsitzventil mit zwei seriell angeordneten, relativ zueinander bewegbaren Schließgliedern (3, 4), die in der Schließstellung des Doppelsitzventils (1) das Überströmen von Fluiden von einem Ventilgehäuseteil (1 a; 1 b) in ein anderes (1b; 1a) verhindern, die sowohl in der Schließ- als auch in der Offenstellung einen Leckagehohlraum (5) begrenzen, der mit der Umgebung des Doppelsitzventils (1) verbunden ist, wobei in der Schließstellung das als Schieberkolben ausgebildete erste Schließglied (3) in einer die Ventilgehäuseteile (1 a, 1 b) miteinander verbindenden Verbindungsöffnung (2c) dichtend Aufnahme findet und im Zuge seiner Öffnungsbewegung am einer zweiten Sitzfläche (2b) zugeordneten zweiten Schließglied (4) über eine zwischen den Schließgliedern (3, 4) wirkende Mitteldichtung (8; 8*) dichtend zur Anlage kommt und letzteres bei der weiteren Öffnungsbewegung gleichfalls in eine Offenstellung (H) überführt wird, wobei das erste Schließglied (3) eine erste Dichtung (6) aufweist, die radial gegenüber einer in der Verbindungsöffnung (2c) ausgebildeten zylindrischen ersten Sitzfläche (2a) abdichtet, mit Schließgliedern (3, 4), die unabhängig voneinander durch einen Teilhub jeweils spaltweit in eine Sitzreinigungsstellung zwecks Spülung ihrer koaxialen Sitzflächen (2a, 2b) überführbar sind, wobei das zweite Schließglied (4) durch einen der Öffnungsbewegung gleichgerichteten zweiten Teilhub (T2) und das erste Schließglied (3) durch einen der Öffnungsbewegung entgegengerichteten ersten Teilhub (T1) in seine jeweilige Sitzreinigungsstellung überführbar sind, mit einem an jedem Schließglied (3, 4) leckageraumseitig angeordneten zylindrischen Ansatz (3*, 4*), der mit der zugeordneten Verbindungsöffnung (2c) einen ringförmigen Drosselspalt (D1, D2) bildet, wobei die erste Sitzfläche (2a) einen Durchmesser aufweist, der kleiner ist als der Durchmesser einer dem zweiten Schließglied (4) zugeordneten ringförmigen Ausnehmung (2d) in der Verbindungsöffnung (2c), und mit einer Übergangsfläche (2e) zwischen der ersten Sitzfläche (2a) und der ringförmigen Ausnehmung (2d), **dadurch gekennzeichnet,**
• **dass** das zweite Schließglied (4) in seiner Schließstellung mit einer an einer Stirnfläche seines zylindrischen Ansatzes (4*) angeordneten Anschlagfläche (4e) an der Übergangsfläche (2e; 2e*) anliegt, und zwar unmittelbar an die erste Sitzfläche (2a, 2g) angrenzend,
• **dass** in der Stirnfläche des zweiten zylindrischen Ansatzes (4*) eine zentrische Ausnehmung (4d) vorgesehen ist, die radial außenseits mit einer rotationssymmetrischen Umlenkfläche (4b) beginnt (Anfangspunkt der Kontur (K)) und stirnseitig von einer im Wesentlichen senkrecht zur Längsachse des zweiten Schließgliedes (4) orientierten Stirnfläche (4c) begrenzt ist, wobei die Umlenkfläche (4b) in die Stirnfläche (4c) ausmündet (Ausmündungspunkt der Kontur (K)),
• **dass** die Umlenkfläche (4b) und die Anschlagfläche (4e) eine zweite Umlaufkante (U2) ausbilden, die in der Schließstellung des zweiten Schließgliedes (4) unmittelbar an einen ersten Endabschnitt (2g) der ersten Sitzfläche (2a) angrenzt,
• **dass**, im Meridianschnitt gesehen, die Umlenkfläche (4b) eine Kontur (K) mit knickfreiem Verlauf aufweist, wobei ein Richtungsvektor im Ausmündungspunkt der Umlenkfläche (4b) in eine zentrisch im ersten Schließglied (3) angeordnete Ablaufbohrung (3d) weist, ohne mit dem ersten Schließglied (3) im Bereich seiner den Leckagehohlraum (5) berandenden Bereiche oder der Mitteldichtung (8; 8*) staudruckbildend zu kollidieren,
• und **dass** eine dem Leckagehohlraum (5) zugewandte stirnseitige Begrenzung des ersten Schließgliedes (3) einen axialen Sicherheitsabstand (x) vom Richtungsvektor an einer als eine erste Umlaufkante (U1) ausgebildeten Austrittsstelle der Übergangsfläche (2e) in den ersten Endabschnitt (2g) besitzt.

2. Doppelsitzventil nach Anspruch 1,
**dadurch gekennzeichnet,**
**dass** die Mitteldichtung (8) in der Stirnfläche (4c) angeordnet ist.

3. Doppelsitzventil nach Anspruch 2,
**dadurch gekennzeichnet,**
**dass** der Sicherheitsabstand (x) wenigstens so groß wie die Summe aller Fertigungstoleranzen der Bauteile des Doppelsitzventils (1) ist, die in der Schließstellung des ersten Schließgliedes (3) dessen geringsten axialen Abstand zur Übergangsfläche (2e) bestimmen.

4. Doppelsitzventil nach Anspruch 1,
**dadurch gekennzeichnet,**
**dass** eine alternative Mitteldichtung (8*) in der stirnseitigen Begrenzung des zylindrischen Ansatzes (3*) des ersten Schließgliedes (3) angeordnet ist und mit der Stirnfläche (4c) zusammenwirkt.

5. Doppelsitzventil nach Anspruch 4,
**dadurch gekennzeichnet,**
**dass** der Sicherheitsabstand (x) wenigstens so groß wie die Summe aller Fertigungstoleranzen der Bauteile des Doppelsitzventils (1) ist, die in der Schließstellung des ersten Schließgliedes (3) dessen geringsten axialen Abstand zur Übergangsfläche (2e) bestimmen, zuzüglich des axialen Abstandes, um den die Mitteldichtung (8) aus der stirnseitigen Begrenzung des zylindrischen Ansatzes (3*) des ersten Schließgliedes (3) herausragt.

6. Doppelsitzventil nach einem der Ansprüche 1 bis 5,
**dadurch gekennzeichnet,**
**dass** ein Richtungsvektor am Anfangspunkt der Kontur (K) mit dem ersten Endabschnitt (2g) fluchtet.

7. Doppelsitzventil nach einem der Ansprüche 1 bis 5,
**dadurch gekennzeichnet,**
**dass** ein Richtungsvektor am Anfangspunkt der Kontur (K) vom Richtungsvektor des ersten Endabschnitts (2g) um einen zweiten Umlenkwinkel (ε) von weniger als 15 Grad abweicht.

8. Doppelsitzventil nach einem der Ansprüche 1 bis 7,
**dadurch gekennzeichnet,**
**dass** der erste Endabschnitt (2g) als konischer Abschnitt (erste Einfahrschräge) ausgebildet ist, der sich mit einem Abrundungsradius (r2) an die Sitzfläche (2a) anschließt und sich zum zweiten Schließglied (4) hin öffnet.

9. Doppelsitzventil nach Anspruch 8,
**dadurch gekennzeichnet,**
**dass** die erste Einfahrschräge (2g) durch wenigstens eine Kegelmantelfläche gebildet ist.

10. Doppelsitzventil nach Anspruch 9,
**dadurch gekennzeichnet,**
**dass** die erste Einfahrschräge (2g) um einen Anstellwinkel (δ) gegen die erste Sitzfläche (2a) geneigt ist.

11. Doppelsitzventil nach Anspruch 10,
**dadurch gekennzeichnet,**
**dass** der Anstellwinkel (δ) im Bereich 0 ≤ δ ≤ 15 Grad, bevorzugt im Bereich 5 ≤ δ ≤ 15 Grad, bevorzugt mit δ = 15 Grad ausgeführt ist.

12. Doppelsitzventil nach Anspruch 9,
**dadurch gekennzeichnet,**
**dass** der erste Endabschnitt (2g) durch zwei mit dem Abrundungsradius (r2) abgerundet ineinander übergehende Kegelmantelflächen gebildet ist, wobei ein sich an die erste Sitzfläche (2a) unmittelbar anschließender zweiter Kegelmantel (2g.2) um einen zweiten Anstellwinkel (δ₂) gegen die erste Sitzfläche (2a) und der andere Kegelmantel (2g.1) um einen ersten Anstellwinkel (δ₁) gegen die erste Sitzfläche (2a) geneigt sind, und wobei der erste Anstellwinkel (δ₁) im Bereich 7,5 ≤ δ₁ ≤ 15 Grad, bevorzugt mit δ₁ = 15 Grad und der zweite Anstellwinkel (δ₂) im Bereich 5 ≤ δ₂ ≤ 10 Grad, bevorzugt mit δ₂ = 7,5 Grad ausgeführt sind.

13. Doppelsitzventil nach einem der Ansprüche 1 bis 12,
**dadurch gekennzeichnet,**
**dass** die von der Übergangsfläche (2e) und dem ersten Endabschnitt (2g) gebildete erste Umlaufkante(U1) mit einer kleinstmöglichen Eckenabrundung (r3) abgerundet ist.

14. Doppelsitzventil nach einem der Ansprüche 1 bis 13,
**dadurch gekennzeichnet,**
**dass** die ringförmige Ausnehmung (2d) mit der Übergangsfläche (2e) einen stumpfen oder einen senkrechten ersten Umlenkwinkel (α) bildet.

15. Doppelsitzventil nach Anspruch 14,
**dadurch gekennzeichnet,**
**dass** die Ausnehmung (2d) einen mit einem Ausrundungsradius (r1) ausgeführten gerundeten Übergang zur Übergangsfläche (2e) aufweist.

16. Doppelsitzventil nach einem der Ansprüche 1 bis 15,
**dadurch gekennzeichnet,**
**dass** die zweite Umlaufkante (U2) mit einer kleinstmöglichen zweiten Eckenabrundung (r4) abgerundet ist.

17. Doppelsitzventil nach einem der Ansprüche 1 bis 16,
**dadurch gekennzeichnet,**
**dass** die Umlenkfläche (4b) die Stirnfläche (4c) um einen axialen Hinterschneidungsabstand (y) hinterschneidet.

18. Doppelsitzventil nach einem der Ansprüche 1 bis 17,
**dadurch gekennzeichnet,**
**dass** die Kontur (K) eine Abfolge von Abschnitten (K1, K2, K3, ..., Kn) aufweist, dass der erste Abschnitt (K1), der dritte Abschnitt (K3) und der aus der Stirnfläche (4c) ausmündende fünfte und letzte Abschnitt (K5 = Kn) jeweils geradlinig ausgeführt sind, und dass diese Abschnitte (K1, K3, K5) über den zweiten und den vierten Abschnitt (K2, K4), die letztere tangential mit einem größtmöglichen ersten und einem zweiten Umlenkradius (r5, r6) abrunden, miteinander verbunden sind.

19. Doppelsitzventil nach einem der Ansprüche 1 bis 17,
**dadurch gekennzeichnet,**
• **dass** die Kontur (K) aus einer Abfolge gekrümmter Abschnitte (K1, K2, K3, ..., Kn) besteht, die an ihren jeweiligen Übergangsstellen jeweils eine gemeinsame Tangente besitzen
• oder dass die Kontur (K) aus einem einzigen Abschnitt kontinuierlich veränderter Krümmungen besteht
• oder dass die Kontur (K) aus einem einzigen Abschnitt mit konstanter Krümmung besteht.

20. Doppelsitzventil nach einem der Ansprüche 1 bis 19,
**dadurch gekennzeichnet,**
**dass** der Richtungsvektor des letzten Abschnitts (Kn) gegenüber der Stirnfläche (4c) einen vierten Umlenkwinkel (β), bevorzugt im Bereich 5 ≤ β ≤ 20 Grad, bevorzugt β = 15 Grad aufweist.

21. Doppelsitzventil nach einem der Ansprüche 1 bis 20,
**dadurch gekennzeichnet,**
**dass** die Ablaufbohrung (3d) den Leckagehohlraum (5) mit der Umgebung des Doppelsitzventils (1) verbindet, und dass die dem Leckagehohlraum (5) zugewandte stirnseitige Begrenzung des ersten Schließgliedes (3) eine allseits umfänglich zur Ablaufbohrung (3d) hin abfallende Anschrägung (3f) aufweist.

22. Doppelsitzventil nach Anspruch 21,
**dadurch gekennzeichnet,**
**dass** die Anschrägung (3f) als Kegelmantelfläche ausgeführt ist.

23. Doppelsitzventil nach Anspruch 22,
**dadurch gekennzeichnet,**
**dass** die Kegelmantelfläche gegenüber der Grundfläche des Kegels um einen Neigungswinkel (ζ), bevorzugt im Bereich 10 ≤ ζ ≤ 20 Grad, bevorzugt ζ = 15 Grad geneigt ist.

24. Doppelsitzventil nach Anspruch 23,
**dadurch gekennzeichnet,**
**dass** eine mit dem ersten Schließglied (3) verbundene erste Verstellstange (3a) eine mit dem zweiten Schließglied (4) verbundene, als Hohlstange ausgeführte zweite Verstellstange (4a) konzentrisch durchdringt, sich fliegend durch die Ablaufbohrung (3d) hindurch fortsetzt und an einem dem zweiten Schließglied (4) abgewandten Ende des ersten Schließgliedes (3) mit letzterem über wenigstens eine im Wesentlichen radial orientierte Traverse (3e) fest verbunden ist.

25. Doppelsitzventil nach Anspruch 24,
**dadurch gekennzeichnet,**
**dass** drei über den Umfang gleichmäßig verteilt angeordnete Traversen (3e) fest an einem Verstellstangenabschnitt (3a*) vorgesehen sind, die jeweils radial außenseits fest mit einem umlaufenden Ring (3g) verbunden sind, und dass der Verstellstangenabschnitt (3a*), die Traversen (3e) und der Ring (3g) ein einstückiges Anschweißteil (30) bilden.

26. Doppelsitzventil nach Anspruch 25,
**dadurch gekennzeichnet,**
**dass** der Anschweißteil (30) außenseits über den Ring (3g) an einen einen leckagehohlraumfernen Abschnitt der Ablaufbohrung (3d) begrenzenden Druckausgleichskolben (3c) und innenseits über den Verstellstangenabschnitt (3a*) an die erste Verstellstange (3a) anschließt, und dass der Ring (3g) in seinem Innendurchmesser derart gegenüber dem Durchmesser der Ablaufbohrung (3d) unter Zwischenschaltung eines konisch sich erweiternden Übergangsbereichs vergrößert ist, dass der Innendurchgang der Ablaufbohrung (3d) durch die Traversen (3e) nicht geschmälert ist.

27. Doppelsitzventil nach einem der Ansprüche 1 bis 26,
**dadurch gekennzeichnet,**
**dass** die zweite Sitzfläche (2b) zylindrisch ausgeführt und durch die ringförmige Ausnehmung (2d) gebildet ist, und dass das zweite Schließglied (4) eine zweite Dichtung (7) aufweist, die radial gegenüber der zweiten Sitzfläche (2b) im Gleiteingriff abdichtet.

28. Doppelsitzventil nach Anspruch 27,
**dadurch gekennzeichnet,**
**dass** die zweite Sitzfläche (2b) einen zum zweiten Schließglied (4) hin sich erweiternden zweiten Endabschnitt (2h) (zweite Einfahrschräge) aufweist.

29. Doppelsitzventil nach Anspruch 28,
**dadurch gekennzeichnet,**
**dass** die zweite Einfahrschräge (2h) gegenüber der zweiten Sitzfläche (2b) um einen dritten Anstellwinkel (δ₃), bevorzugt im Bereich 7,5 ≤ δ₃ ≤ 15 Grad, bevorzugt δ₃ = 10 Grad angestellt ist.

30. Doppelsitzventil nach Anspruch 28 oder 29,
**dadurch gekennzeichnet,**
**dass** sich die zweite Einfahrschräge (2h) an ihrem dem zweiten Schließglied (4) zugewandten Ende in eine Öffnungsschräge (2i) erweitert, wobei letztere gegenüber der zweiten Sitzfläche (2b) um einen Öffnungswinkel (ϕ), bevorzugt im Bereich 35 ≤ ϕ ≤ 55 Grad, bevorzugt ϕ = 45 Grad angestellt ist.

31. Doppelsitzventil nach einem der Ansprüche 1 bis 26,
**dadurch gekennzeichnet,**
**dass** die zweite Sitzfläche (2b) kegelförmig ausgeführt und gegenüber der zylindrischen Ausnehmung (2d) um einen Sitzwinkel (γ) geneigt ist, und dass das zweite Schließglied (4) eine zweite Dichtung (7) aufweist, die axial/radial gegenüber der zweiten Sitzfläche (2b) im Gleit-/Druckeingriff abdichtet.

32. Doppelsitzventil nach Anspruch 31,
**dadurch gekennzeichnet,**
**dass** der Sitzwinkel (γ) im Bereich 25 ≤ γ ≤ 35 Grad, bevorzugt γ = 30 Grad ausgeführt ist.

33. Doppelsitzventil nach Anspruch 31 oder 32,
**dadurch gekennzeichnet,**
**dass** sich die zweite Sitzfläche (2b) an ihrem dem zweiten Schließglied (4) zugewandten Ende in eine Öffnungsschräge (2i) erweitert, wobei letztere gegenüber der zylindrischen Ausnehmung (2d) um einen Öffnungswinkel (ϕ), bevorzugt im Bereich 35 ≤ ϕ ≤ 55 Grad, bevorzugt ϕ = 45 Grad angestellt ist.

34. Doppelsitzventil nach einem der Ansprüche 1 bis 26,
**dadurch gekennzeichnet,**
**dass** die zweite Sitzfläche (2b) senkrecht zur Längsachse des Doppelsitzventils (1) angeordnet ist, und dass das zweite Schließglied (4) eine zweite Dichtung (7) aufweist, die axial gegenüber der zweiten Sitzfläche (2b) im Druckeingriff abdichtet.

35. Doppelsitzventil nach einem der Ansprüche 1 bis 34,
**dadurch gekennzeichnet,**
**dass** ein Endabschnitt (4**) des zweiten zylindrischen Ansatzes (4*) radial außenseits im Anschluss an die Anschlagfläche (4e) eine ringförmig umlaufende zweite Anschrägung (4f) aufweist, die gegen die Anschlagfläche (4e) unter einem Anschrägungswinkel (λ) verläuft, der derart bemessen ist, dass eine zwischen der zweiten Anschrägung (4f) und dem zweiten Durchmesser (d2) des zweiten zylindrischen Ansatzes (4*) durch Abrundung gebildete dritte Umlaufkante (U3), in radialer Richtung gesehen, so weit wie möglich nach außen verlagert und so nah wie zulässig an den durch den Ausrundungsradius (r1) bestimmten Verlauf der Übergangsfläche (2e) herangeführt ist und dort eine ringförmig umlaufende Zentrierstelle (Z) bildet.

## Claims

1. Double seat valve comprising two closing elements (3, 4) arranged in series and movable with regard to each other, which prevent in the closed position of the double seat valve (1) that fluids from one valve housing part {1a; 1b) flow into the other one (1b; 1a), which define in the closed as well as in the open position a leakage cavity (5)*ᵣ* which is connected with the surrounding of the double seat valve (1), wherein in the closed position the first closing element (3) formed as a slide piston is received in sealing manner in a connecting opening (2c) connecting the valve housing parts (1a, 1b) with each other and comes to abut in sealing manner in the course of its opening movement at a second closing element (4) associated with a second seat (2b) through an intermediate seal (8; 8*) acting between the closing elements (3, 4), and the second closing element is also transferred to an open position (H) during the further opening movement, the first closing element (3) comprising a first seal (6), which seals radially against a cylindrical first seat (2a) formed in the connecting opening (2c), closing elements (3, 4), which can be transferred independently from each other by a partial lift each gap-wide to a seat cleaning position in order to rinse their coaxial seats (2a, 2b), wherein the second closing element (4) can be transferred by a second partial lift (T2) in the same direction as the opening movement and the first closing element (3) by a first partial lift (T1) in the direction opposed to the opening movement to its respective seat cleaning Position, a cylindrical lug (3*, 4*) arranged at each closing element (3, 4} on the leakage cavity side, which forms an annular choke gap (D1, D2) with the associated connecting opening (2c), the first seat (2a) comprising a diameter, which is smaller than the diameter of an annular recess (2d) associated with the second closing element (4) in the connecting opening (2c), and a transition area (2e) between the first seat (2a) and the annular recess (2d) , **characterised in that**
• the second closing element (4) abuts in its closed Position with a stop face (4e) arranged at a front face of its cylindrical lug (4*) against the transition surface (2e; 2e*), and that directly adjacent to the first seat (2a, 2g);
• in the front face of the second cylindrical lug (4*) a central recess (4d) is provided, which Starts radially on the outside with a rotationally symmetrical diversion area (4b) (starting point of the contour (K)) and is bounded on the front side by a front face (4c) oriented substantially vertically towards the longitudinal axis of the second closing element (4), said diversion area (4b) leading into the front face (4c) (outlet point of the contour (K)),
• the diversion area (4b) and the stop face (4e) form a second circumferential edge (U2), which is directly adjacent to a first end section (2g) of the first seat (2a) in the closed position of the second closing element (4),
• viewed in vertical centre section, the diversion area (4b) comprises a contour (K) with an unbent shape, wherein a direction vector in the outlet point of the diversion area (4b) points into a discharge bore (3d) centrally arranged in the first closing element (3), without colliding with the first closing element (3) in the area of its areas bounding the leakage cavity (5) or of the intermediate seal (8; 8*) and thus without forming impact pressure, and
• a frontal boundary of the first closing element (3) directed towards the leakage cavity (5) has an axial safety distance (x) from the direction vector at an exit point of the transition area (2e) formed as a first circumferential edge (U1) into the first end section (2g).

2. Double seat valve according to claim 1, **characterised in that**
the intermediate seal (8) is arranged in the- front face (4c).

3. Double seat valve according to claim 2*ᵣ* **characterised in that**
the safety distance (x) is at least as large as the sum of all production tolerances of the components of the double seat valve (1), which determine in the closed Position of the first closing eleraent (3) the smallest axial distance thereof to the transition area (2e).

4. Double seat valve according to Claim 1, **characterised in that**
an alternative intermediate seal (8*) is arranged in the frontal boundary of the cylindrical lug (3*) of the first closing element (3) and co-operates with the front face (4c).

5. Double seat valve according to claim 4, **characterised in that**
the safety distance (x) is at least as large as the sum of all production tolerances of the components of the double seat valve (1), which determine in the closed Position of the first closing element (3) the smallest axial distance thereof to the transition area (2e), plus the axial distance, by which the intermediate seal (8) projects from the front side boundary of the cylindrical lug (3*) of the first closing element (3).

6. Double seat valve according to one of the Claims 1 to 5, **characterised in that**
a direction vector at the starting point of the contour (K) is flush with the first end section (2g).

7. Double seat valve according to one of the Claims 1 to 5, **characterised in that**
a direction vector at the starting point of the contour (K) deviates from the direction vector of the first end section (2g) by a second diversion angle (ε) of less than 15 degrees.

8. Double seat valve according to one of the claims 1 to 7, **characterised in that**
the first end section (2g) is formed as conical section (first inlet slope), which connects to the seat (2a) with an angle of curvature (r2) and opens towards the second closing element (4).

9. Double seat valve according to claim 8, **characterised in that**
the first inlet slope (2g) is formed by at least one envelope of cone.

10. Double seat valve according to claim 9, **characterised in that**
the first inlet slope (2g) is inclined with regard to the first seat (2a) by an angle of pitch (δ).

11. Double seat valve according to claim 10, **characterised in that**
the angle of pitch (δ) is configured in the range of 0 ≤ δ ≤ 15 degrees, preferably in the range of 5 ≤ δ ≤ 15 degrees, preferably δ = 15 degrees.

12. Double seat valve according to claim 9, **characterised in that**
the first end section (2g) is formed by two envelopes of cone merging into each other rounded with the radius of curvature (r2), a second envelope of cone (2g.2) directly connecting to the first seat (2a) being inclined with regard to the first seat (2a) by a second angle of pitch (δ₂) and the other envelope of cone {2g.1) being inclined with regard to the first seat (2a) by a first angle of pitch (δ₁), and wherein the first angle of pitch (δ₁) is configured in the range of 7,5 ≤ δ₁ ≤ 15 degrees, preferably δ₁ = 15 degrees, and the second angle of pitch (δ₂) in the range of 5 ≤ δ₂ ≤ 10 degrees, preferably δ₂ = 7,5 degrees.

13. Double seat valve according to one of the claims 1 to 12, **characterised in that**
the first circumferential edge (U1) formed by the transition area (2e) and the first end section (2g) is rounded with a smallest-possible corner rounding (r3).

14. Double seat valve according to one of the claims 1 to 13, **characterised in that**
the annular recess (2d) forms an obtuse or a vertical first diversion angle (α) with the transition area (2e).

15. Double seat valve according to claim 14, **characterised in that**
the recess (2d) comprises a rounded transition configured with a radius of curvature (r1) to the transition area (2e).

16. Double seat valve according to one of the Claims 1 to 15, **characterised in that**
the second circumferential edge (U2) is rounded with a smallest possible second corner rounding (r4).

17. Double seat valve according to one of the Claims 1 to 16, **characterised in that**
the diversion area (4b) undercuts the front face (4c) by an axial undercutting distance (y).

18. Double seat valve according to one of the Claims 1 to 17, **characterised in that**
the contour (K) comprises a sequence of sections (K1, K2, K3, ..., Kn), the first section (K1), the third section (K3) and the fifth and last section (K5 = Kn) leading out of the front face (4c) are each configured linear, and that these sections (K1, K3, K5) are connected with each other through the second and fourth section (K2, K4), which tangentially round the latter with a largest-possible first and a second diversion radius (r5, r6).

19. Double seat valve according to one of the Claims 1 to 17, **characterised in that**
• the contour (K) consists of a sequence of bent sections (K1, K2, K3, ..., Kn), which each have a common tangent at their respective transition points
• or that the contour (K) consists of a Single section of continuously varying curvatures
• or that the contour (K) consists of a Single section with constant curvature.

20. Double seat valve according to one of the Claims 1 to 19, **characterised in that**
the direction vector of the last section (Kn) comprises a fourth diversion angle (β) with regard to the front face (4c) preferably in the range of 5 ≤ β ≤ 20 degrees, preferably β = 15 degrees.

21. Double seat valve according to one of the Claims 1 to 20, **characterised in that**
the discharge opening (3d) connects the leakage cavity (5) with the surrounding of the double seat valve (1), and that the frontal boundary of the first closing element (3) directed towards the leakage cavity (5) comprises a chamfer (3f) dropping circumferentially on all sides towards the discharge opening (3d).

22. Double seat valve according claim 21, **characterised in that**
the chamfer (3f) is configured as an envelope of cone.

23. Double seat valve according to claim 22; **characterised in that**
the envelope of cone is inclined with regard to the base of the cone by an angle of inclination (ζ) preferably in the range of 10 ≤ ζ ≤20 degrees, preferably ζ = 15 degrees.

24. Double seat valve according to claim 23, **characterised in that**
a shifting rod (3a) connected with the first closing element (3) concentrically penetrates a second shifting rod (4a) connected with the second closing element (4) and configured as a hollow rod, flying continues through the discharge bore (3d) and is fixedly connected at an end of the first closing element (3) averted from the second closing element (4) to the first element through at least one substantially radially oriented traverse (3e).

25. Double seat valve according to claim 24, **characterised in that**
three traverses (3e) arranged equally spaced across the circumference are fixedly provided at a shifting rod section (3a*), which are each fixedly connected on the radial outside with a circumferential ring (3g), and that the shifting rod section (3a*), the traverses (3e) and the ring (3g) form an integral welding part (30).

26. Double seat valve according to claim 25, **characterised in that**
the welding part (30) connects on the outside through the ring (3g) to a pressure balance piston (3c) bounding a section of the discharge bore (3d) remote from the leakage cavity and on the inside through the shifting rod section (3a*) to the first shifting rod (3a), and that the ring (3g) is enlarged in its inner diameter with regard to the diameter of the discharge opening (3d) with interposition of a conical expanding transition area such that the inner passage of the discharge bore (3d) is not narrowed by the traverses (3e) .

27. Double seat valve according to one of the Claims 1 to 26, **characterised in that**
the second seat (2b) is configured cylindrical and formed by the annular recess (2d), and that the second closing element (4) comprises a second seal (7), which seals against the second seat (2b) in sliding engagement.

28. Double seat valve according to Claim 27, **characterised in that**
the second seat (2b) comprises a second end section (2h) (second inlet slope) expanding towards the second closing element (4).

29. Double seat valve according to Claim 28, **characterised in that**
the second inlet slope (2h) is pitched with regard to the second seat (2b) by a. third angle of pitch (δ₃) preferably in the range of 7,5 ≤ δ₃ ≤ 15 degrees, preferably δ₃ = 10 degrees.

30. Double seat valve according to Claim 28 or 29, **characterised in that**
the second inlet slope (2h) expands at its end directed towards the second closing element (4) into an opening slope (2i), the latter being pitched with regard to the second seat (2b) by an opening angle (ϕ) preferably in the range of 35 ≤ ϕ ≤ 55 degrees, preferably ϕ = 45 degrees.

31. Double seat valve according to one of the Claims 1 to 26, **characterised in that**
the second seat (2b) is configured conical and is inclined with regard to the cylindrical recess (2d) by a seat angle (γ), and that the second closing element (4) comprises a second seal (7), which seals axially/radially against the second seat (2b) in sliding/pressing engagement.

32. Double seat valve according to claim 31, **characterized in that**
the seat angle (γ) is configured in the range of 25 ≤ γ ≤ 35 degrees, preferably γ = 30 degrees.

33. Double seat valve according to claim 31 or 32, **characterised in that**
the second seat (2b) expands at its end directed towards the second closing element (4) into an opening slope (2i), the latter being pitched with regard to the cylindrical recess (2d) by an opening angle (ϕ) preferably in the range of 35 ≤ ϕ ≤ 55 degrees, preferably ϕ= 45 degrees.

34. Double seat valve according one of the Claims 1 to 26, **characterised in that**
the second seat (2b) is arranged vertically to the longitudinal axis of the double seat valve (1), and that the second closing element (4) comprises a second seal (7), which seals axially against the second seat (2b) in pressing engagement.

35. Double seat valve according to one of the Claims 1 to 34, **characterised in that**
an end section (4**) of the second cylindrical lug (4*) comprises an annular circumferential second chamfer (4f) radially on the outside following the stop face (4e), which extends against the stop face (4e) under a chamfer angle (λ), which is dimensioned such that a third circumferential edge (U3) formed by rounding between the second chamfer (4f) and the second diameter (d2) of the second cylindrical lug (4*) is shifted, viewed in radial direction, outwards as far as possible and as close as admissible to the shape of the transition area (2e) determined by the radius of curvature (r1 and forms an annular circumferential centring point (Z) there.

## Revendications

1. Soupape à double siège avec deux éléments de fermeture (3, 4) disposés en série et mobiles l'un par rapport à l'autre, qui empêchent le débordement de fluides d'une partie du boîtier de soupape (1a; 1b) dans une autre (1b; 1a) dans la position de fermeture de la soupape à double siège (1), qui aussi bien en position de fermeture qu'en position d'ouverture délimitent une cavité de fuite (5), qui est raccordée avec les environs de la soupape à double siège (1), le premier élément de fermeture (3), réalisé sous forme de piston tiroir, étant reçu de façon étanche dans un ouverture de raccordement (2c) raccordant les parties du boîtier de soupape (1a; 1b) l'une à l'autre dans la position de fermeture et, au cours de son mouvement d'ouverture, prenant appui de façon étanche dans le deuxième élément de fermeture (4) attribué à une deuxième surface de siège (2b) à travers un joint d'étanchéité central (8; 8*) agissant entre les éléments de fermeture (3, 4), et ce dernier étant également passé à une position d'ouverture (H) dans la poursuite du mouvement de fermeture, et dans laquelle le premier élément de fermeture (3) présente un premier joint d'étanchéité (6) qui rend radialement étanche à l'égard d'une première surface de siège cylindrique (2a) formée dans l'ouverture de raccordement (2c), avec des éléments de fermeture (3, 4) qui peuvent être passés dans une position de nettoyage de siège pour le rinçage de leurs surfaces de siège coaxiales (2a, 2b) indépendamment les uns des autres par un levage partiel de respectivement la largeur d'une fente, le deuxième élément de fermeture (4) pouvant être passé dans sa position de nettoyage de siège respective par un deuxième levage partiel (T2) dans le même sens que le mouvement d'ouverture, et le premier élément de fermeture (3) en peut par un première levage partiel (T1) dans le sens opposé à celui du mouvement d'ouverture, avec une saillie cylindrique (3*, 4*) disposée du côté de l'espace de fuite sur chaque élément de fermeture (3, 4), qui forme une fente d'étranglement annulaire (D1, D2) avec l'ouverture de raccordement attribuée (2c), et dans laquelle la première surface de siège (2a) présente un diamètre qui est moins grand que le diamètre d'une entaille annulaire (2d) dans l'ouverture de raccordement (2c) attribuée au deuxième élément de fermeture (4), et avec une surface de transition (2e) entre la première surface de siège (2a) et l'entaille annulaire (2d), **caractérisé en ce que**
• le deuxième élément de fermeture (4), dans sa position de fermeture, prend appui sur la surface de transition (2e; 2e*) par une surface d'arrêt (4e) disposée dans une surface frontale de sa saillie cylindrique (4*), à savoir immédiatement avoisinant à la première surface de siège (2a, 2g),
• une entaille centrale (4d) est pourvue dans la surface frontale de la deuxième saillie cylindrique (4*), qui commence avec une surface déflectrice (4b) à symétrie de révolution sur le côté radialement extérieur (point de départ du contour (K)) et qui est délimitée du côté de front par une surface frontale (4c) orientée essentiellement verticale par rapport à l'axe longitudinal du deuxième élément de fermeture (4), la surface déflectrice (4b) débouchant dans la surface frontale (4c) (point d'embouchure du contour (K)),
• la surface déflectrice (4b) et la surface d'arrêt (4e) forment une deuxième arête périphérique (U2) qui est immédiatement avoisinante à une première extrémité (2g) de la première surface de siège (2a) dans la position de fermeture du deuxième élément de fermeture (4),
• vue dans une coupe méridienne, la surface déflectrice (4b) présente un contour (K) avec une course sans courbure, un vecteur de direction montrant à un perçage d'écoulement (3d) disposé centralement dans le premier élément de fermeture (3) sur le point d'embouchure de la surface déflectrice (4b), sans collision formant une pression dynamique avec le premier élément de fermeture (3) dans la zone de ses régions qui débordent la cavité de fuite (5) ou avec le joint d'étanchéité central (8; 8*),
• et une limitation située du côté front du premier élément de fermeture (3), tournée vers la cavité de fuite (5), possède une distance de sécurité axiale (x) du vecteur de direction sur un endroit de sortie formé comme une première arête périphérique (U1) de la surface de transition (2e) vers la première extrémité (2g).

2. Soupape à double siège selon la revendication 1,
**caractérisé en ce que**
le joint d'étanchéité central (8) est disposé dans la surface frontale (4c).

3. Soupape à double siège selon la revendication 2,
**caractérisé en ce que**
la distance de sécurité (x) est au moins si grande que la somme de toutes les tolérances de fabrication des éléments structurels de la soupape à double siège (1) qui déterminent la distance axiale minimale à la surface de transition (2e) dans la position de fermeture du premier élément de fermeture (3).

4. Soupape à double siège selon la revendication 1,
**caractérisé en ce que**
un joint d'étanchéité central alternatif (8*) est disposé dans la limitation sur le côté front de la saillie cylindrique (3*) du premier élément de fermeture (3) et coopère avec la surface frontale (4c)

5. Soupape à double siège selon la revendication 4,
**caractérisé en ce que**
la distance de sécurité (x) est au moins si grande que la somme de toutes les tolérances de fabrication des éléments structurels de la soupape à double siège (1) qui déterminent la distance axiale minimale à la surface de transition (2e) dans la position de fermeture du premier élément de fermeture (3), plus la distance axiale pour laquelle le joint d'étanchéité central (8) dépasse la limitation sur le côté front de la saillie cylindrique (3*) du premier élément de fermeture (3).

6. Soupape à double siège selon l'une quelconque des revendications 1 à 5,
**caractérisé en ce que**
un vecteur de direction sur le point de départ du contour (K) affleure la première extrémité.

7. Soupape à double siège selon l'une quelconque des revendications 1 à 5,
**caractérisé en ce que**
un vecteur de direction dans le point de départ du contour (K) diffère du vecteur de direction de la première extrémité (2g) pour un deuxième angle de déflexion (ε) de moins que 15 degrés.

8. Soupape à double siège selon l'une quelconque des revendications 1 à 7,
**caractérisé en ce que**
la première extrémité (2g) est réalisée comme une partie conique (première inclinaison d'entrée) qui se joint à la surface de siège (2a) avec un rayon d'arrondi (r2) et s'ouvre vers le deuxième élément de fermeture (4).

9. Soupape à double siège selon la revendication 8,
**caractérisé en ce que**
la première inclinaison d'entrée 2(g) est formée par au moins une aire latérale de cône.

10. Soupape à double siège selon la revendication 9,
**caractérisé en ce que**
la première inclinaison d'entrée (2g) est inclinée par rapport à la première surface de siège (2a) avec un angle d'attaque (δ).

11. Soupape à double siège selon la revendication 10,
**caractérisé en ce que**
l'angle d'attaque (δ) est réalisé dans la gamme de 0 ≤ δ ≤ 15 degrés, préférablement dans la gamme de 5 ≤ δ ≤ 15 degrés, et préférablement δ = 15 degrés.

12. Soupape à double siège selon la revendication 9,
**caractérisé en ce que**
que la première extrémité (2g) est formé par deux aires latérales de cône se changeant l'une en l'autre de façon arrondie avec le rayon d'arrondi (r2), une deuxième aire latérale de cône (2g.2) se joignant immédiatement à la première surface de siège (2a) étant inclinée avec un deuxième angle d'attaque (δ₂) contre la première surface de siège (2a), et l'autre aire latérale de cône (2g.1) étant incliné avec un premier angle d'attaque (δ₁) contre la première surface de siège (2a), et dans laquelle le premier angle d'attaque (δ₁) est réalisé dans la gamme de 7,5 ≤ δ₁ ≤ 15 degrés, préférablement avec δ₁ = 15 degrés, et le deuxième angle d'attaque (δ₂) est réalisé dans la gamme de 5 ≤ δ₂ ≤ 10 degrés, préférablement avec δ₁ = 7,5 degrés.

13. Soupape à double siège selon l'une quelconque des revendications 1 à 12,
**caractérisé en ce que**
la première arête périphérique (U1), formée par la surface de transition (2e) et la première extrémité (2g), est arrondie avec un rayon de pointe (r3) aussi petit que possible.

14. Soupape à double siège selon l'une quelconque des revendications 1 à 13,
**caractérisé en ce que**
l'entaille annulaire (2d) forme un premier angle de déflexion (α) obtus ou perpendiculaire avec la surface de transition (2e).

15. Soupape à double siège selon la revendication 14,
**caractérisé en ce que**
l'entaille (2d) présente une transition arrondie vers la surface de transition (2e) réalisée avec un rayon d'arrondi (r1).

16. Soupape à double siège selon l'une quelconque des revendications 1 à 15,
**caractérisé en ce que**
la deuxième arête périphérique (U2) est arrondie avec un deuxième rayon de pointe (r4) aussi petit que possible.

17. Soupape à double siège selon l'une quelconque des revendications 1 à 16,
**caractérisé en ce que**
la surface déflectrice (4b) contre-dépouille la surface frontale (4c) par une distance axiale de contre-dépouillement (y).

18. Soupape à double siège selon l'une quelconque des revendications 1 à 17,
**caractérisé en ce que**
le contour (K) présente une suite de segments (K1, K2, K3,....., Kn), le premier segment (K1), le troisième segment (K3) et le cinquième et dernier segment (K5 = Kn) débouchant de la surface frontale (4c) chacun étant réalisé en ligne droite, et ces segments (K1, K2, K3,....., Kn) sont liés l'un avec l'autre par le deuxième et le quatrième segment (K2, K4), lesquels arrondirent tangentiellement avec un premier rayon de déflexion aussi grand que possible et un deuxième rayon de déflexion (r5, r6).

19. Soupape à double siège selon l'une quelconque des revendications 1 à 17,
**caractérisé en ce que**
• le contour (K) consiste d'une suite de segments courbés (K1, K2, K3,....., Kn) qui possèdent une tangente commune dans leurs respectives endroits de transition
• ou le contour (K) consiste d'un seul segment de courbures continûment changeantes,
• ou le contour (K) consiste d'un seul segment avec courbure constante.

20. Soupape à double siège selon l'une quelconque des revendications 1 à 19,
**caractérisé en ce que**
le vecteur de direction du dernier segment (Kn) présente un quatrième angle de déflexion (β) par rapport à la surface frontale (4c), préférablement dans la gamme de 5 ≤ β ≤ 20 degrés, préférablement avec β = 15 degrés.

21. Soupape à double siège selon l'une quelconque des revendications 1 à 20,
**caractérisé en ce que**
le perçage d'écoulement (3d) relie la cavité de fuite (5) avec les environs de la soupape à double siège (1), et la limitation du côté frontal du premier élément de fermeture (3) tournée vers la cavité de fuite (5) présente un chanfrein (3f) retombant partout dans le périmètre vers le perçage d'écoulement (3d).

22. Soupape à double siège selon la revendication 21,
**caractérisé en ce que**
le chanfrein (3f) est réalisé comme une aire latérale de cône.

23. Soupape à double siège selon la revendication 22,
**caractérisé en ce que**
l'aire latérale de cône est inclinée par rapport à la surface de base du cône avec un angle de inclinaison (ζ), préférablement dans la gamme de 10 ≤ ζ ≤ 20 degrés, préférablement avec ζ=15 degrés.

24. Soupape à double siège selon la revendication 23,
**caractérisé en ce que**
une première tige de réglage (3a) reliée avec le premier élément de fermeture (3) pénètre de façon concentrique une deuxième tige de réglage (4a), reliée avec le deuxième élément de fermeture (4) et réalisée comme une tige creuse, se prolonge de façon flottante à travers le perçage d'écoulement (3d) et est fixement reliée avec le premier élément de fermeture (3) dans une extrémité de ce dernier opposée au deuxième élément de fermeture (4) par au moins une traverse (3e) orientée essentiellement radialement.

25. Soupape à double siège selon la revendication 24,
**caractérisé en ce que**
trois traverses (3e) disposées sur le périmètre de façon d'une distribution symétrique sont prévues fixement dans une partie de tige de réglage (3a*), qui sont chacune fixement reliées sur le côté radial extérieur avec un anneau circonférentiel (3g), et la partie de tige de réglage (3a*), les traverses (3e) et l'anneau (3g) forment une pièce de soudage en monobloc (30).

26. Soupape à double siège selon la revendication 25,
**caractérisé en ce que**
la pièce de soudage (30) se joint dans son côté extérieur via l'anneau (3g) à un piston d'équilibrage de pression (3d) limitant une partie du perçage d'écoulement (3d) loin de la cavité de fuite, et dans son côté intérieur à la première tige de réglage (3a) via la partie de tige de réglage (3a*), et l'anneau (3g) est élargi dans son diamètre intérieur par rapport au diamètre du perçage d'écoulement, une zone de transition s'élargissant en façon de cône étant intercalée, de façon que le passage intérieur du perçage d'écoulement (3d) ne soit pas rétréci par les traverses (3e).

27. Soupape à double siège selon l'une quelconque des revendications 1 à 26,
**caractérisé en ce que**
la deuxième surface de siège (2b) est réalisée en façon de cylindre et formée par l'entaille annulaire (2d), et le deuxième élément de fermeture (4) présente un deuxième joint d'étanchéité (7), qui rend étanche radialement par rapport à la deuxième surface de siège (2b) par un engagement glissant.

28. Soupape à double siège selon la revendication 27,
**caractérisé en ce que**
la deuxième surface de siège (2b) présente une deuxième extrémité (2h) (deuxième inclinaison d'entrée) s'élargissant vers le deuxième élément de fermeture (4).

29. Soupape à double siège selon la revendication 28,
**caractérisé en ce que**
la deuxième inclinaison d'entrée (2h) est inclinée par rapport à la deuxième surface de siège (2b) dans un troisième angle d'attaque (δ₃), préférablement dans la gamme de 7,5 ≤ δ₃ ≤ 15 degrés, préférablement avec δ₃ = 10 degrés.

30. Soupape à double siège selon la revendication 28 ou 29,
**caractérisé en ce que**
dans son extrémité tournée vers le deuxième élément de fermeture (4), la deuxième inclinaison d'entrée (2h) s'élargit en une inclinaison d'ouverture (2i), cette dernière étant mise en attaque par rapport à la deuxième surface de siège (2b) avec un angle d'ouverture (ϕ) préférablement dans la gamme de 35 ≤ ϕ ≤ 55 degrés, préférablement ϕ = 45 degrés.

31. Soupape à double siège selon l'une quelconque des revendications 1 à 26,
**caractérisé en ce que**
la deuxième surface de siège (2b) est réalisée en forme d'un cône et inclinée par rapport à l'entaille cylindrique (2d) avec un angle de siège (γ), et le deuxième élément de fermeture (4) présente un deuxième joint d'étanchéité (7), qui rend étanche axialement/radialement par rapport à la deuxième surface de siège (2b) dans un engagement glissant/pressant.

32. Soupape à double siège selon la revendication 31,
**caractérisé en ce que**
l'angle de siège (γ) est réalisé dans la gamme de 25 ≤ γ ≤ 35 degrés, préférablement γ = 30 degrés.

33. Soupape à double siège selon la revendication 31 ou 32,
**caractérisé en ce que**
dans son extrémité tournée vers le deuxième élément de fermeture (4), la deuxième surface de siège (2b) s'élargit en une inclinaison d'ouverture (2i), cette dernière étant mise en attaque par rapport à l'entaille cylindrique avec un angle d'ouverture (ϕ) préférablement dans la gamme de 35 ≤ ϕ ≤ 55 degrés, préférablement avec ϕ = 45 degrés.

34. Soupape à double siège selon l'une quelconque des revendications 1 à 26,
**caractérisé en ce que**
la deuxième surface de siège (2b) est disposée de façon perpendiculaire par rapport à l'axe longitudinal de la soupape à double siège (1), et le deuxième élément de fermeture (4) présente un deuxième joint d'étanchéité (7) qui rend étanche par rapport à la deuxième surface de siège (2b) dans un engagement de pression.

35. Soupape à double siège selon l'une quelconque des revendications 1 à 34,
**caractérisé en ce que**
du côté radialement extérieur à la suite de la surface d'arrêt (4e), une extrémité (4**) de la deuxième saillie cylindrique (4*) présente un deuxième chanfrein circonférentiel annulaire (4f), qui passe par rapport a la surface d'arrêt (4e) avec un angle de chanfreinage (λ) qui est dimensionné en façon qu'une troisième arête périphérique (U3) formée par arrondissage entre le deuxième chanfrein (4f) et le deuxième diamètre (d2) du deuxième épaulement cylindrique (4*) soit passée vers l'extérieur, vu dans la direction radiale si loin que possible, et approchée si près qu'admissible à la course de la surface de transition (2e) déterminée par le rayon d'arrondissement (r1), et forme là une position de centrage circonférentielle annulaire (Z).
